(19) Europäisches Patentamt
European Patent Office
Office européen des brevets

(11) **EP 4 633 050 A1**

(12) **EUROPEAN PATENT APPLICATION**
published in accordance with Art. 153(4) EPC

(43) Date of publication:
**15.10.2025 Bulletin 2025/42**

(21) Application number: **23910693.3**

(22) Date of filing: **27.12.2023**

(51) International Patent Classification (IPC):
***H04B 7/0456*** (2017.01)

(52) Cooperative Patent Classification (CPC):
**H04B 7/0404; H04B 7/0456; H04B 7/06;
H04B 7/08; H04L 1/1812; H04L 5/00**

(86) International application number:
**PCT/CN2023/142259**

(87) International publication number:
**WO 2024/140774 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.12.2022 CN 202211733799**

(71) Applicant: **Huawei Technologies Co., Ltd.
Shenzhen, Guangdong 518129 (CN)**

(72) Inventors:
• **LI, Xi**
**Shenzhen, Guangdong 518129 (CN)**
• **CAI, Shijie**
**Shenzhen, Guangdong 518129 (CN)**
• **LIU, Xianda**
**Shenzhen, Guangdong 518129 (CN)**
• **LIU, Kunpeng**
**Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND APPARATUS**

(57) This application provides a communication method and an apparatus. The method includes: A terminal device determines a first group of demodulation reference signal DMRS ports and a second group of DMRS ports, where the first group of DMRS ports correspond to a first antenna set, the second group of DMRS ports correspond to a second antenna set, the terminal device corresponds to M antenna identifiers, the first antenna set corresponds to a part of the M antenna identifiers, and the second antenna set corresponds to the other part of the M antenna identifiers. The terminal device receives received signals from a network device based on the first antenna set and the second antenna set, where the received signals include a first received signal corresponding to the first antenna set and a second received signal corresponding to the second antenna set. In this application, computing complexity is low, and a transmission requirement can be ensured.

FIG. 7

**Description**

This application claims priority to Chinese Patent Application No. 202211733799.6, filed with the China National Intellectual Property Administration on December 30, 2022 and entitled "COMMUNICATION METHOD AND APPARATUS", which is incorporated herein by reference in its entirety.

**TECHNICAL FIELD**

This application relates to the field of communication technologies, and in particular, to a communication method and an apparatus.

**BACKGROUND**

A clear market requirement shows that a downlink peak transmission rate needs to be increased to 1.6 switching bandwidth (Gbps). To meet this requirement, an 8R receiver needs to be used during downlink transmission to effectively improve spectral efficiency. The 8R receiver indicates a receiver device that includes eight receive antennas.

However, when multi-path transmission is performed (a quantity of transmitted data streams is greater than 4), implementation difficulty and computing complexity for a conventional 8R receiver device are high. Therefore, the 8R receiver may be split into two "virtual UEs" including 4R. For example, a $1^{st}$ to a $4^{th}$ receive antennas correspond to a virtual UE 1, a $5^{th}$ to an $8^{th}$ antennas correspond to a virtual UE 2, and each "virtual UE" receives and processes a signal. This can effectively resolve problems of the high implementation difficulty and the high computing complexity for the 8R receiver device. However, there is no design for this splitting solution in a current standard and protocol, and a transmission requirement of a receiver architecture in which the 8R receiver is split into the two "virtual UEs" including 4R cannot be met.

**SUMMARY**

This application discloses a communication method and an apparatus. In this application, computing complexity is low, and a transmission requirement can be ensured.

According to a first aspect, this application provides a communication method. The method includes: A terminal device determines a first group of demodulation reference signal DMRS ports and a second group of DMRS ports, where the first group of DMRS ports correspond to a first antenna set, the second group of DMRS ports correspond to a second antenna set, the terminal device corresponds to M antenna identifiers, the first antenna set corresponds to a part of the M antenna identifiers, and the second antenna set corresponds to the other part of the M antenna identifiers. The terminal device receives received signals from a network device based on the first antenna set and the second antenna set, where the received signals include a first received signal corresponding to the first antenna set and a second received signal corresponding to the second antenna set.

In the foregoing method, the terminal device determines the first group of DMRS ports and the second group of DMRS ports, and receives the received signals from the network device based on the first antenna set and the second antenna set. To be specific, the terminal device receives the first received signal from the network device based on the first antenna set, and receives the second received signal from the network device based on the second antenna set. In this manner, the signals can be respectively received and processed. This implementation is simple, and computing complexity is low. In comparison with a conventional implementation in which the terminal device corresponds to M antenna identifiers, a third antenna set corresponds to the M antenna identifiers, and the terminal device receives a signal from the network device based on the third antenna set, in this application, the computing complexity is low, and a transmission requirement can be ensured.

In a possible implementation, the antenna identifier includes a sounding reference signal SRS antenna port number and/or an antenna number.

In another possible implementation, the first group of DMRS ports belong to a first code division multiplexing CDM group, the second group of DMRS ports belong to a second CDM group, the first CDM group includes at least one CDM group, and the second CDM group includes at least one CDM group.

In another possible implementation, the first CDM group is different from the second CDM group.

In the foregoing method, in a manner in which the first group of DMRS ports belong to the first CDM group, the second group of DMRS ports belong to the second CDM group, and the first CDM group is different from the second CDM group, a case in which a DMRS port included in the first group of DMRS ports and a DMRS port included in the second group of DMRS ports belong to a same CDM group can be avoided, thereby avoiding strong interference impact of a codeword with high power on a codeword with low power in a downlink DMRS channel estimation process, and improving transmission performance.

In another possible implementation, the method further includes: The terminal device receives first indication information from the network device, where the first indication information indicates that the first antenna set corresponds to the first CDM group and/or the second antenna set corresponds to the second CDM group.

In the foregoing method, in a manner in which the terminal device receives the first indication information from the network device, the terminal device can determine, based on the first indication information, that the first antenna set corresponds to the first CDM group and/or the second antenna set corresponds to the second CDM group, so that the terminal device quickly divides used DMRS ports into two groups: the first group of DMRS ports and the second group of DMRS ports based on the first indication information.

In another possible implementation, that the terminal device determines the first group of demodulation reference signal DMRS ports and the second group of DMRS ports includes: The terminal device determines the first group of DMRS ports and the second group of DMRS ports when determining that a quantity of transmitted data streams meets a first condition.

In another possible implementation, configurations of the first group of DMRS ports and the second group of DMRS ports are related to the quantity of transmitted data streams, and the quantity of transmitted data streams includes a quantity of transmitted data streams corresponding to the first antenna set and a quantity of transmitted data streams corresponding to the second antenna set.

In another possible implementation, M is equal to 8.

According to a second aspect, this application provides a communication method. The method includes: A network device determines a first group of demodulation reference signal DMRS ports and a second group of DMRS ports, where the first group of DMRS ports correspond to a first antenna set, the second group of DMRS ports correspond to a second antenna set, a terminal device corresponds to M antenna identifiers, the first antenna set corresponds to a part of the M antenna identifiers, and the second antenna set corresponds to the other part of the M antenna identifiers. The network device sends received signals to the terminal device based on the first antenna set and the second antenna set, where the received signals include a first received signal corresponding to the first antenna set and a second received signal corresponding to the second antenna set.

In the foregoing method, the network device determines the first group of DMRS ports and the second group of DMRS ports, and sends the received signals to the terminal device based on the first antenna set and the second antenna set. To be specific, the network device sends the first received signal to the terminal device based on the first antenna set, and sends the second received signal based on the second antenna set. In this manner, the signals can be respectively sent and processed. This implementation is simple, and computing complexity is low. In comparison with a conventional implementation in which the terminal device corresponds to M antenna identifiers, a third antenna set corresponds to the M antenna identifiers, and the network device sends a signal to the terminal device based on the third antenna set, in this application, the computing complexity is low, and a transmission requirement can be ensured.

In a possible implementation, the antenna identifier includes a sounding reference signal SRS antenna port number and/or an antenna number.

In another possible implementation, the first group of DMRS ports belong to a first code division multiplexing CDM group, the second group of DMRS ports belong to a second CDM group, the first CDM group includes at least one CDM group, and the second CDM group includes at least one CDM group.

In another possible implementation, the first CDM group is different from the second CDM group.

In the foregoing method, in a manner in which the first group of DMRS ports belong to the first CDM group, the second group of DMRS ports belong to the second CDM group, and the first CDM group is different from the second CDM group, a case in which a DMRS port included in the first group of DMRS ports and a DMRS port included in the second group of DMRS ports belong to a same CDM group can be avoided, thereby avoiding strong interference impact of a codeword with high power on a codeword with low power in a downlink DMRS channel estimation process, and improving transmission performance.

In another possible implementation, the method further includes: The network device sends first indication information to the terminal device, where the first indication information indicates that the first antenna set corresponds to the first CDM group and/or the second antenna set corresponds to the second CDM group.

In the foregoing method, in a manner in which the network device sends the first indication information to the terminal device, the terminal device can determine, based on the first indication information, that the first antenna set corresponds to the first CDM group and/or the second antenna set corresponds to the second CDM group, so that the terminal device quickly divides used DMRS ports into two groups: the first group of DMRS ports and the second group of DMRS ports based on the first indication information.

In another possible implementation, configurations of the first group of DMRS ports and the second group of DMRS ports are related to a quantity of transmitted data streams, and the quantity of transmitted data streams includes a quantity of transmitted data streams corresponding to the first antenna set and a quantity of transmitted data streams corresponding to the second antenna set.

In another possible implementation, M is equal to 8.

According to a third aspect, this application provides a communication method. The method includes: A terminal device determines one channel state information CSI set or at least one CSI set, where the one CSI set or each of the at least one CSI set includes first CSI and second CSI, the terminal device corresponds to M antenna identifiers, a first antenna set corresponds to a part of the M antenna identifiers, a second antenna set corresponds to the other part of the M antenna identifiers, the first CSI is CSI corresponding to the first antenna set, and the second CSI is CSI corresponding to the second antenna set. The terminal device sends the one CSI set or the at least one CSI set to a network device.

In the foregoing method, a manner in which the terminal device sends the one CSI set or the at least one CSI set to the network device may be understood as a manner in which the terminal device sends the first CSI in the one CSI set or the at least one CSI set to the network device based on the first antenna set, and sends the second CSI in the one CSI set or the at least one CSI set to the network device based on the second antenna set, so that the terminal device feeds back different CSI based on different antenna sets, thereby meeting a transmission requirement.

In a possible implementation, the antenna identifier includes a sounding reference signal SRS antenna port number and/or an antenna number.

In another possible implementation, that the terminal device sends the at least one CSI set to the network device includes: The terminal device sends the at least one CSI set to the network device according to a preset rule.

In another possible implementation, the preset rule includes at least one mode.

In another possible implementation, when the preset rule includes one of the at least one mode, the terminal device sends one of the at least one CSI set to the network device based on the mode.

In another possible implementation, first rank indication information in the first CSI is determined based on a channel measurement result corresponding to the first antenna set and a channel measurement result corresponding to the second antenna set, and second rank indication information in the second CSI is determined based on the channel measurement result corresponding to the first antenna set and the channel measurement result corresponding to the second antenna set.

In the foregoing method, transmission performance can be improved in the foregoing manner.

In another possible implementation, a manner of determining a CQI in the first CSI and/or the second CSI is specified in a protocol.

In another possible implementation, the method further includes: The terminal device receives third indication information from the network device, where the third indication information indicates a manner of determining a CQI in the first CSI and/or the second CSI.

In another possible implementation, the method further includes: The terminal device sends fourth indication information to the network device, where the fourth indication information indicates a manner of determining a CQI in the first CSI and/or the second CSI.

According to a fourth aspect, this application provides a communication method. The method includes: A network device receives one CSI set or at least one CSI set from a terminal device, where the one CSI set or each of the at least one CSI set includes first CSI and second CSI, the terminal device corresponds to M antenna identifiers, a first antenna set corresponds to a part of the M antenna identifiers, a second antenna set corresponds to the other part of the M antenna identifiers, the first CSI is CSI corresponding to the first antenna set, and the second CSI is CSI corresponding to the second antenna set.

In the foregoing method, a manner in which the network device receives the one CSI set or the at least one CSI set from the terminal device may be understood as a manner in which the network device receives the first CSI in the one CSI set or the at least one CSI set from the terminal device based on the first antenna set, and receives the second CSI in the one CSI set or the at least one CSI set from the terminal device based on the second antenna set, so that the network device receives, based on different antenna sets, different CSI fed back by the terminal device, thereby meeting a transmission requirement.

In a possible implementation, the antenna identifier includes a sounding reference signal SRS antenna port number and/or an antenna number.

In another possible implementation, first rank indication information in the first CSI is determined based on a channel measurement result corresponding to the first antenna set and a channel measurement result corresponding to the second antenna set, and second rank indication information in the second CSI is determined based on the channel measurement result corresponding to the first antenna set and the channel measurement result corresponding to the second antenna set.

In the foregoing method, transmission performance can be improved in the foregoing manner.

In another possible implementation, a manner of determining a CQI in the first CSI and/or the second CSI is specified in a protocol.

In another possible implementation, the method further includes: The network device sends third indication information to the terminal device, where the third indication information indicates a manner of determining a CQI in the first CSI and/or the second CSI.

In another possible implementation, the method further includes: The network device receives fourth indication information from the terminal device, where the fourth indication information indicates a manner of determining a CQI in the first CSI and/or the second CSI.

According to a fifth aspect, this application provides a communication method. The method includes: A terminal device determines that interference of a first received signal corresponding to a first antenna set to a second received signal corresponding to a second antenna set is less than a first threshold, where the terminal device corresponds to M antenna identifiers, the first antenna set corresponds to a part of the M antenna identifiers, and the second antenna set corresponds to the other part of the M antenna identifiers. The terminal device receives the first received signal and the second received signal from a network device based on the first antenna set and the second antenna set.

In the foregoing method, the terminal device determines that the interference of the first received signal corresponding to the first antenna set to the second received signal corresponding to the second antenna set is less than the first threshold, that is, the terminal device determines that the network device performs zero-forcing precoding on a codeword corresponding to the first antenna set. The terminal device receives the first received signal and the second received signal from the network device based on the first antenna set and the second antenna set. Correspondingly, the terminal device performs successive interference cancellation SIC on the first received signal. In this manner, computing complexity is low, and a transmission requirement is met.

In a possible implementation, the antenna identifier includes a sounding reference signal SRS antenna port number and/or an antenna number.

In another possible implementation, the method further includes: The terminal device receives first indication information from the network device, where the first indication information indicates that the interference of the first received signal corresponding to the first antenna set to the second received signal corresponding to the second antenna set is less than the first threshold, or interference of the second received signal corresponding to the second antenna set to the first received signal corresponding to the first antenna set is less than the first threshold.

In another possible implementation, the first indication information indicates that the interference of the first received signal corresponding to the first antenna set to the second received signal corresponding to the second antenna set is less than the first threshold, and the method further includes: The terminal device determines, based on the first indication information, to decode the second received signal. The terminal device receives a DMRS that corresponds to the second antenna set and that is in the second received signal. The terminal device decodes the second received signal based on the DMRS corresponding to the second antenna set. The terminal device receives a DMRS that corresponds to the first antenna set and that is in the first received signal, and processes the first received signal. Processing the first received signal includes performing successive interference cancellation SIC on the first received signal, and decoding the first received signal.

In another possible implementation, the method further includes: The terminal device sends second indication information to the network device, where the second indication information indicates that the network device determines that the interference of the first received signal corresponding to the first antenna set to the second received signal corresponding to the second antenna set is less than the first threshold, or the interference of the second received signal corresponding to the second antenna set to the first received signal corresponding to the first antenna set is less than the first threshold.

In another possible implementation, that the interference of the first received signal corresponding to the first antenna set to the second received signal corresponding to the second antenna set is less than the first threshold, or the interference of the second received signal corresponding to the second antenna set to the first received signal corresponding to the first antenna set is less than the first threshold is agreed on in a protocol. In other words, the terminal device divides used DMRS ports into two groups: a first group of DMRS ports and a second group of DMRS ports. The first group of DMRS ports correspond to the first antenna set, and the second group of DMRS ports correspond to the second antenna set. That the interference of the first received signal corresponding to the first group of DMRS ports to the second received signal corresponding to the second group of DMRS ports is less than the first threshold, or the interference of the second received signal corresponding to the second group of DMRS ports to the first received signal corresponding to the first group of DMRS ports is less than the first threshold is agreed on in the protocol.

In another possible implementation, if the interference of the first received signal corresponding to the first antenna set to the second received signal corresponding to the second antenna set is less than the first threshold, a modulation order of the codeword corresponding to the first antenna set is lower than a modulation order of a codeword corresponding to the second antenna set.

According to a sixth aspect, this application provides a communication method. The method includes: A network device determines that interference of a first received signal corresponding to a first antenna set to a second received signal corresponding to a second antenna set is less than a first threshold. The network device sends the first received signal and the second received signal to a terminal device based on the first antenna set and the second antenna set, where the terminal device corresponds to M antenna identifiers, the first antenna set corresponds to a part of the M antenna identifiers, and the second antenna set corresponds to the other part of the M antenna identifiers.

In the foregoing method, the network device determines that the interference of the first received signal corresponding to the first antenna set to the second received signal corresponding to the second antenna set is less than the first threshold, that is, the network device determines that the network device performs zero-forcing precoding on a codeword corresponding to the first antenna set. The network device sends the first received signal and the second received signal to the terminal device based on the first antenna set and the second antenna set. Correspondingly, the terminal device performs successive interference cancellation SIC on the first received signal. In this manner, computing complexity is low, and a transmission requirement is met.

In a possible implementation, the antenna identifier includes a sounding reference signal SRS antenna port number and/or an antenna number.

In another possible implementation, the method further includes: The network device sends first indication information to the terminal device, where the first indication information indicates that the interference of the first received signal corresponding to the first antenna set to the second received signal corresponding to the second antenna set is less than the first threshold, or interference of the second received signal corresponding to the second antenna set to the first received signal corresponding to the first antenna set is less than the first threshold.

In another possible implementation, the method further includes: The network device receives second indication information from the terminal device, where the second indication information indicates that the network device determines that the interference of the first received signal corresponding to the first antenna set to the second received signal corresponding to the second antenna set is less than the first threshold, or the interference of the second received signal corresponding to the second antenna set to the first received signal corresponding to the first antenna set is less than the first threshold.

In another possible implementation, that the interference of the first received signal corresponding to the first antenna set to the second received signal corresponding to the second antenna set is less than the first threshold, or the interference of the second received signal corresponding to the second antenna set to the first received signal corresponding to the first antenna set is less than the first threshold is agreed on in a protocol. In other words, the terminal device divides used DMRS ports into two groups: a first group of DMRS ports and a second group of DMRS ports. The first group of DMRS ports correspond to the first antenna set, and the second group of DMRS ports correspond to the second antenna set. That the interference of the first received signal corresponding to the first group of DMRS ports to the second received signal corresponding to the second group of DMRS ports is less than the first threshold, or the interference of the second received signal corresponding to the second group of DMRS ports to the first received signal corresponding to the first group of DMRS ports is less than the first threshold is agreed on in the protocol.

In another possible implementation, if the interference of the first received signal corresponding to the first antenna set to the second received signal corresponding to the second antenna set is less than the first threshold, a modulation order of the codeword corresponding to the first antenna set is lower than a modulation order of a codeword corresponding to the second antenna set.

According to a seventh aspect, this application provides a communication apparatus, including a processing unit and a communication unit. The processing unit is configured to determine a first group of demodulation reference signal DMRS ports and a second group of DMRS ports, where the first group of DMRS ports correspond to a first antenna set, the second group of DMRS ports correspond to a second antenna set, the apparatus corresponds to M antenna identifiers, the first antenna set corresponds to a part of the M antenna identifiers, and the second antenna set corresponds to the other part of the M antenna identifiers. The communication unit is configured to receive received signals from a network device based on the first antenna set and the second antenna set, where the received signals include a first received signal corresponding to the first antenna set and a second received signal corresponding to the second antenna set.

In a possible implementation, the antenna identifier includes a sounding reference signal SRS antenna port number and/or an antenna number.

In another possible implementation, the first group of DMRS ports belong to a first code division multiplexing CDM group, the second group of DMRS ports belong to a second CDM group, the first CDM group includes at least one CDM group, and the second CDM group includes at least one CDM group.

In another possible implementation, the first CDM group is different from the second CDM group.

In another possible implementation, the communication unit is further configured to receive first indication information from the network device, where the first indication information indicates that the first antenna set corresponds to the first CDM group and/or the second antenna set corresponds to the second CDM group.

In another possible implementation, the processing unit is configured to determine the first group of DMRS ports and the second group of DMRS ports when determining that a quantity of transmitted data streams meets a first condition.

In another possible implementation, configurations of the first group of DMRS ports and the second group of DMRS ports are related to the quantity of transmitted data streams, and the quantity of transmitted data streams includes a quantity of transmitted data streams corresponding to the first antenna set and a quantity of transmitted data streams corresponding to the second antenna set.

In another possible implementation, M is equal to 8.

For technical effects brought by the seventh aspect or the possible implementations, refer to the descriptions of the technical effects brought by the first aspect or the corresponding implementations.

According to an eighth aspect, this application provides a communication apparatus, including a processing unit and a communication unit. The processing unit is configured to determine a first group of demodulation reference signal DMRS ports and a second group of DMRS ports, where the first group of DMRS ports correspond to a first antenna set, the second group of DMRS ports correspond to a second antenna set, a terminal device corresponds to M antenna identifiers, the first antenna set corresponds to a part of the M antenna identifiers, and the second antenna set corresponds to the other part of the M antenna identifiers. The communication unit is configured to send received signals to the terminal device based on the first antenna set and the second antenna set, where the received signals include a first received signal corresponding to the first antenna set and a second received signal corresponding to the second antenna set.

In a possible implementation, the antenna identifier includes a sounding reference signal SRS antenna port number and/or an antenna number.

In another possible implementation, the first group of DMRS ports belong to a first code division multiplexing CDM group, the second group of DMRS ports belong to a second CDM group, the first CDM group includes at least one CDM group, and the second CDM group includes at least one CDM group.

In another possible implementation, the first CDM group is different from the second CDM group.

In another possible implementation, the communication unit is further configured to send first indication information to the terminal device, where the first indication information indicates that the first antenna set corresponds to the first CDM group and/or the second antenna set corresponds to the second CDM group.

In another possible implementation, configurations of the first group of DMRS ports and the second group of DMRS ports are related to a quantity of transmitted data streams, and the quantity of transmitted data streams includes a quantity of transmitted data streams corresponding to the first antenna set and a quantity of transmitted data streams corresponding to the second antenna set.

In another possible implementation, M is equal to 8.

For technical effects brought by the eighth aspect or the possible implementations, refer to the descriptions of the technical effects brought by the second aspect or the corresponding implementations.

According to a ninth aspect, this application provides a communication apparatus, including a processing unit and a communication unit. The processing unit is configured to determine one channel state information CSI set or at least one CSI set, where the one CSI set or each of the at least one CSI set includes first CSI and second CSI, the apparatus corresponds to M antenna identifiers, a first antenna set corresponds to a part of the M antenna identifiers, a second antenna set corresponds to the other part of the M antenna identifiers, the first CSI is CSI corresponding to the first antenna set, and the second CSI is CSI corresponding to the second antenna set. The communication unit is configured to send the one CSI set or the at least one CSI set to a network device.

In a possible implementation, the antenna identifier includes a sounding reference signal SRS antenna port number and/or an antenna number.

In another possible implementation, the communication unit is configured to send the at least one CSI set to the network device according to a preset rule.

In another possible implementation, the preset rule includes at least one mode.

In another possible implementation, the communication unit is configured to: when the preset rule includes one of the at least one mode, send one of the at least one CSI set to the network device based on the mode.

In another possible implementation, first rank indication information in the first CSI is determined based on a channel measurement result corresponding to the first antenna set and a channel measurement result corresponding to the second antenna set, and second rank indication information in the second CSI is determined based on the channel measurement result corresponding to the first antenna set and the channel measurement result corresponding to the second antenna set.

In another possible implementation, a manner of determining a CQI in the first CSI and/or the second CSI is specified in a protocol.

In another possible implementation, the communication unit is further configured to receive third indication information from the network device, where the third indication information indicates a manner of determining a CQI in the first CSI and/or the second CSI.

In another possible implementation, the communication unit is further configured to send fourth indication information to the network device, where the fourth indication information indicates a manner of determining a CQI in the first CSI and/or the second CSI.

For technical effects brought by the ninth aspect or the possible implementations, refer to the descriptions of the technical effects brought by the third aspect or the corresponding implementations.

According to a tenth aspect, this application provides a communication apparatus, including a processing unit and a communication unit. The communication unit is configured to receive one CSI set or at least one CSI set from a terminal device, where the one CSI set or each of the at least one CSI set includes first CSI and second CSI, the terminal device corresponds to M antenna identifiers, a first antenna set corresponds to a part of the M antenna identifiers, a second antenna set corresponds to the other part of the M antenna identifiers, the first CSI is CSI corresponding to the first antenna set, and the second CSI is CSI corresponding to the second antenna set.

In a possible implementation, the antenna identifier includes a sounding reference signal SRS antenna port number and/or an antenna number.

In another possible implementation, first rank indication information in the first CSI is determined based on a channel measurement result corresponding to the first antenna set and a channel measurement result corresponding to the second antenna set, and second rank indication information in the second CSI is determined based on the channel measurement result corresponding to the first antenna set and the channel measurement result corresponding to the second antenna set.

In another possible implementation, a manner of determining a CQI in the first CSI and/or the second CSI is specified in a protocol.

In another possible implementation, the communication unit is further configured to send third indication information to the terminal device, where the third indication information indicates a manner of determining a CQI in the first CSI and/or the second CSI.

In another possible implementation, the communication unit is further configured to receive fourth indication information from the terminal device, where the fourth indication information indicates a manner of determining a CQI in the first CSI and/or the second CSI. For technical effects brought by the tenth aspect or the possible implementations, refer to the descriptions of the technical effects brought by the fourth aspect or the corresponding implementations.

According to an eleventh aspect, this application provides a communication apparatus, including a processing unit and a communication unit. The processing unit is configured to determine that interference of a first received signal corresponding to a first antenna set to a second received signal corresponding to a second antenna set is less than a first threshold, where the apparatus corresponds to M antenna identifiers, the first antenna set corresponds to a part of the M antenna identifiers, and the second antenna set corresponds to the other part of the M antenna identifiers. The communication unit is configured to receive the first received signal and the second received signal from a network device based on the first antenna set and the second antenna set.

In a possible implementation, the antenna identifier includes a sounding reference signal SRS antenna port number and/or an antenna number.

In another possible implementation, the communication unit is configured to receive first indication information from the network device, where the first indication information indicates that the interference of the first received signal corresponding to the first antenna set to the second received signal corresponding to the second antenna set is less than the first threshold, or interference of the second received signal corresponding to the second antenna set to the first received signal corresponding to the first antenna set is less than the first threshold.

In another possible implementation, the first indication information indicates that the interference of the first received signal corresponding to the first antenna set to the second received signal corresponding to the second antenna set is less than the first threshold. The processing unit is configured to determine, based on the first indication information, to decode the second received signal. The communication unit is configured to receive a DMRS that corresponds to the second antenna set and that is in the second received signal. The processing unit is configured to decode the second received signal based on the DMRS corresponding to the second antenna set. The communication unit is configured to: receive a DMRS that corresponds to the first antenna set and that is in the first received signal, and process the first received signal.

In another possible implementation, the communication unit is configured to send second indication information to the network device, where the second indication information indicates that the network device determines that the interference of the first received signal corresponding to the first antenna set to the second received signal corresponding to the second antenna set is less than the first threshold, or the interference of the second received signal corresponding to the second antenna set to the first received signal corresponding to the first antenna set is less than the first threshold.

In another possible implementation, that the interference of the first received signal corresponding to the first antenna set to the second received signal corresponding to the second antenna set is less than the first threshold, or the interference of the second received signal corresponding to the second antenna set to the first received signal corresponding to the first antenna set is less than the first threshold is agreed on in a protocol.

In another possible implementation, if the interference of the first received signal corresponding to the first antenna set to the second received signal corresponding to the second antenna set is less than the first threshold, a modulation order of a codeword corresponding to the first antenna set is lower than a modulation order of a codeword corresponding to the second antenna set.

For technical effects brought by the eleventh aspect or the possible implementations, refer to the descriptions of the technical effects brought by the fifth aspect or the corresponding implementations.

According to a twelfth aspect, this application provides a communication apparatus, including a processing unit and a communication unit. The processing unit is configured to determine that interference of a first received signal corresponding to a first antenna set to a second received signal corresponding to a second antenna set is less than a first threshold. The communication unit is configured to send the first received signal and the second received signal to a terminal device based on the first antenna set and the second antenna set, where the terminal device corresponds to M antenna identifiers, the first antenna set corresponds to a part of the M antenna identifiers, and the second antenna set corresponds to the other part of the M antenna identifiers.

In a possible implementation, the antenna identifier includes a sounding reference signal SRS antenna port number and/or an antenna number.

In another possible implementation, the communication unit is configured to send first indication information to the terminal device, where the first indication information indicates that the interference of the first received signal corresponding to the first antenna set to the second received signal corresponding to the second antenna set is less than the first threshold, or interference of the second received signal corresponding to the second antenna set to the first received signal corresponding to the first antenna set is less than the first threshold.

In another possible implementation, the communication unit is configured to receive second indication information from the terminal device, where the second indication information indicates that that the interference of the first received signal corresponding to the first antenna set to the second received signal corresponding to the second antenna set is less than the first threshold, or the interference of the second received signal corresponding to the second antenna set to the first received signal corresponding to the first antenna set is less than the first threshold is determined.

In another possible implementation, that the interference of the first received signal corresponding to the first antenna set to the second received signal corresponding to the second antenna set is less than the first threshold, or the interference of the second received signal corresponding to the second antenna set to the first received signal corresponding to the first antenna set is less than the first threshold is agreed on in a protocol.

In another possible implementation, if the interference of the first received signal corresponding to the first antenna set to the second received signal corresponding to the second antenna set is less than the first threshold, a modulation order of a codeword corresponding to the first antenna set is lower than a modulation order of a codeword corresponding to the second antenna set.

For technical effects brought by the twelfth aspect or the possible implementations, refer to the descriptions of the technical effects brought by the sixth aspect or the corresponding implementations.

According to a thirteenth aspect, this application provides a communication apparatus. The apparatus includes at least one processor and a communication interface. The at least one processor is configured to invoke a computer program stored in at least one memory, to enable the apparatus to implement the method according to any one of the foregoing aspects or the possible implementations of the foregoing aspects. Optionally, the processor may be integrated with the memory.

According to a fourteenth aspect, this application provides a chip system. The chip system includes at least one processor and a communication interface. The at least one processor is configured to execute a computer program or instructions, to implement the method according to any one of the foregoing aspects or the possible implementations of the foregoing aspects.

According to a fifteenth aspect, this application provides a computer-readable storage medium. The computer-readable storage medium stores computer instructions. When the computer instructions are run on a processor, the method according to any one of the foregoing aspects or the possible implementations of the foregoing aspects is implemented.

According to a sixteenth aspect, this application provides a computer program product. The computer program product includes computer program code. When the computer program code is run on a computer, the method according to any one of the foregoing aspects or the possible implementations of the foregoing aspects is implemented.

According to a seventeenth aspect, this application provides a communication system. The system includes the apparatus according to the seventh aspect and the apparatus according to the eighth aspect.

According to an eighteenth aspect, this application provides a communication system. The system includes the apparatus according to the ninth aspect and the apparatus according to the tenth aspect.

According to a nineteenth aspect, this application provides a communication system. The system includes the apparatus according to the eleventh aspect and the apparatus according to the twelfth aspect.

**BRIEF DESCRIPTION OF DRAWINGS**

The following describes the accompanying drawings used in this application.

FIG. 1 is a diagram of a structure of a communication system according to this application;
FIG. 2 is a diagram of a structure of a terminal device according to this application;
FIG. 3 is a diagram of a downlink receiving and sending procedure of a terminal device according to this application;
FIG. 4 is a diagram of a structure of an 8R receiver device according to this application;
FIG. 5 is a diagram of a downlink receiving and sending procedure of an 8R receiver device according to this application;

FIG. 6 is a diagram of a DMRS time-frequency resource mapping manner according to this application;
FIG. 7 is a schematic flowchart of a communication method according to this application;
FIG. 8 is a schematic flowchart of another communication method according to this application;
FIG. 9 is a schematic flowchart of another communication method according to this application;
FIG. 10 is a diagram of a structure of a communication apparatus according to this application; and
FIG. 11 is a diagram of a structure of another communication apparatus according to this application.

**DESCRIPTION OF EMBODIMENTS**

Embodiments of this application are described with reference to the accompanying drawings in embodiments of this application.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th Generation, 5G) mobile communication system, and a new radio access technology (new radio access technology, NR). The 5G mobile communication system may include non-standalone (non-standalone, NSA) and/or standalone (standalone, SA).

The technical solutions provided in this application may be further applied to machine-type communication (machine-type communication, MTC), long term evolution-machine (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as vehicle-to-X (vehicle-to-X, V2X, where X may represent anything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like. A V2X communication system is a sidelink (sidelink, SL) transmission technology that is based on D2D communication.

The technical solutions provided in this application may be further applied to a future communication system like a 6th generation mobile communication system. This is not limited in this application.

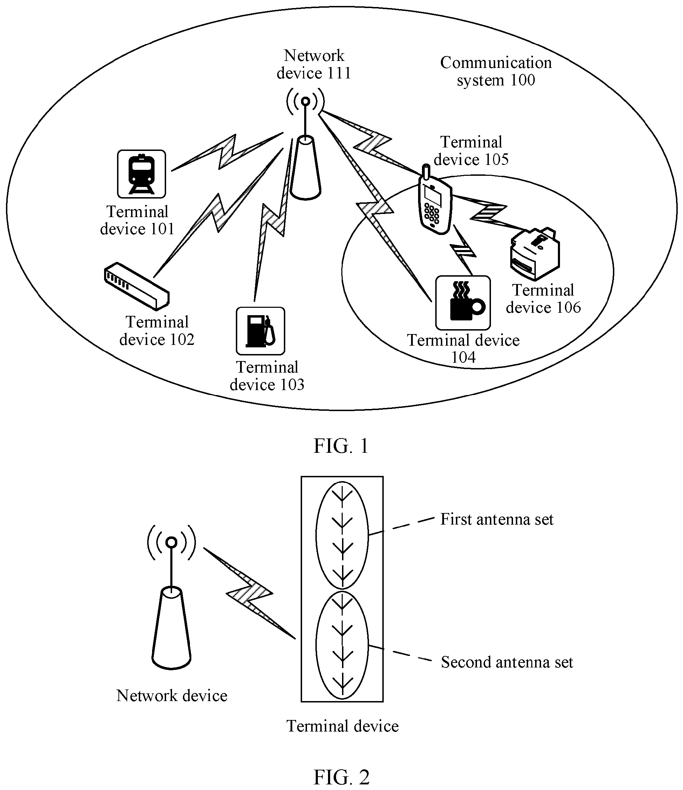

FIG. 1 is a diagram of a structure of a communication system 100 according to this application. The communication system 100 includes a network device 111, a terminal device 101, a terminal device 102, a terminal device 103, a terminal device 104, a terminal device 105, and a terminal device 106. It should be understood that the communication system 100 may include more network devices or more or fewer terminal devices. The network device and the terminal device may be hardware, or software obtained through functional division, or a combination thereof. The network device and the terminal device may communicate with each other through another device or network element. In this system, the network device 111 may perform data transmission with a plurality of terminal devices. To be specific, the network device 111 sends downlink data to the terminal device 101 to the terminal device 106. Certainly, the terminal device 101 to the terminal device 106 may send uplink data to the network device 111. In addition, the terminal device 104, the terminal device 105, and the terminal device 106 may alternatively constitute a communication system. In this system, the network device 111 may send downlink data to the terminal device 101, the terminal device 102, and the terminal device 105. Then, the terminal device 105 sends the downlink data to the terminal device 104 or the terminal device 106. A method in embodiments of this application may be applied to the communication system 100 shown in FIG. 1. The network device 110 may be any network device described below as an example. The terminal device 101 to the terminal device 106 may be any terminal devices described below as an example.

The terminal device 101 is used as an example for description. For the terminal device 102 to the terminal device 106, refer to related descriptions of the terminal device 101. FIG. 2 is a diagram of a structure of a terminal device 101 according to this application. The terminal device corresponds to M antenna identifiers, where M is a positive integer greater than 0, a first antenna set corresponds to a part of the M antenna identifiers, and a second antenna set corresponds to the other part of the M antenna identifiers. For example, M=8, that is, the terminal device corresponds to eight antenna identifiers: a $1^{st}$ antenna identifier to an $8^{th}$ antenna identifier. Four of the eight antenna identifiers correspond to the first antenna set. For example, the $1^{st}$ antenna identifier to a $4^{th}$ antenna identifier correspond to the first antenna set. Remaining four of the eight antenna identifiers correspond to the second antenna set. For example, a $5^{th}$ antenna identifier to the $8^{th}$ antenna identifier correspond to the second antenna set. The terminal device 101 may receive and process signals respectively based on the first antenna set and the second antenna set. The first antenna set and the second antenna set may also be respectively referred to as a first antenna group and a second antenna group, a virtual user equipment 1 (user equipment 1, UE 1) and a virtual UE 2, or the like for short. This is not limited in embodiments of this application.

Based on the architectural diagram of the terminal device shown in FIG. 2, an example in which a data channel is a physical downlink shared channel (physical downlink shared channel, PDSCH) is used, and received signal vectors of the terminal device may be represented as:

$$Y_1 = H_1 * [\hat{V}_1, \hat{V}_2] * S_1 + H_1 * [V_5, V_6, V_7] * S_2 + n_1 \quad \text{Formula (1)}$$

$$Y_2 = H_2 * [V_5, V_6, V_7] * S_2 + n_2 \quad \text{Formula (2)}$$

$Y_1$ represents a first received signal corresponding to the first antenna set, $Y_2$ represents a second received signal corresponding to the second antenna set, $H_1$ represents a channel corresponding to the first antenna set, $H_2$ represents a channel corresponding to the second antenna set, $[\hat{V}_1, \hat{V}_2]$ represents a precoding matrix corresponding to the first antenna set, $[V_5, V_6, V_7]$ represents a precoding matrix corresponding to the second antenna set, $S_1$ represents a sent downlink transmission signal corresponding to the first antenna set, $S_2$ represents a sent downlink transmission signal corresponding to the second antenna set, $n_1$ represents noise corresponding to the first antenna set, and $n_2$ represents noise corresponding to the second antenna set.

The precoding matrix $[V_5, V_6, V_7]$ corresponding to the second antenna set may be determined according to the following formula:

$$[V_5, V_6, V_7, V_8] = svd(H_2)$$

svd() represents a singular value decomposition operation.

The precoding matrix $[\hat{V}_1, \hat{V}_2]$ corresponding to the first antenna set may be determined according to the following formula:

$$[V_1, V_2, V_3, V_4] = svd(H_1)$$

$V = [V_1, V_2, V_5, V_6, V_7]$. Because $\hat{V} = V * [V^H * V]^{-1}$, $[\hat{V}_1, \hat{V}_2] = \hat{V}(:, [1,2])$.

svd() represents a singular value decomposition operation.

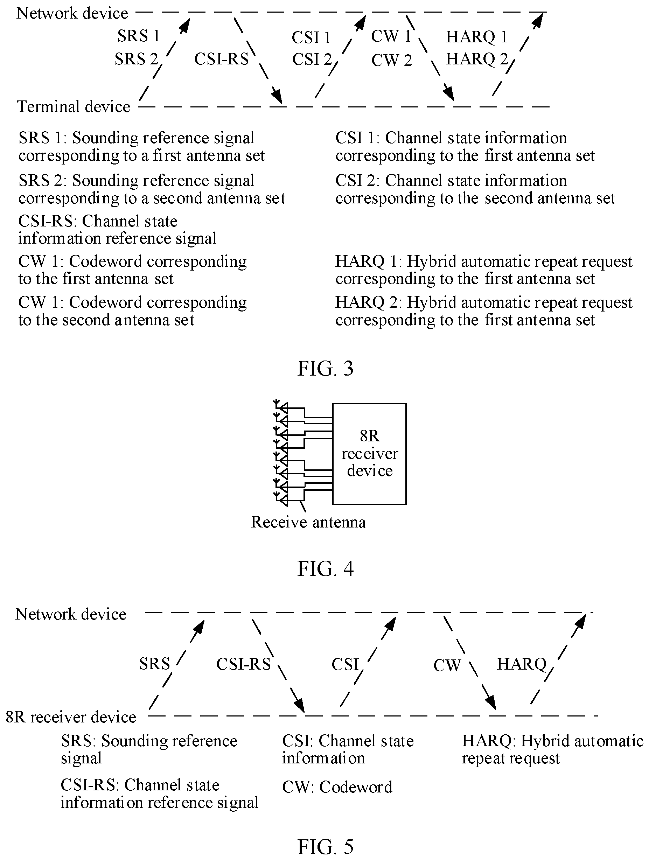

FIG. 3 is a diagram of a downlink (downlink, DL) receiving and sending procedure of a terminal device according to an embodiment of this application. Details are as follows:

The terminal device may send an SRS 1 and an SRS 2 to a network device, where the SRS 1 is a sounding reference signal (sounding reference signal, SRS) corresponding to a first antenna set, and the SRS 2 is an SRS corresponding to a second antenna set. The network device performs channel state information (channel state information, CSI) measurement based on the SRS 1 and the SRS 2, and determines a channel state information reference signal (channel state information reference signal, CSI-RS) based on a measurement result. The network device sends the CSI-RS to the terminal device. The terminal device determines a measurement indicator based on the CSI-RS, and sends CSI 1 and CSI 2 to the network device, where the CSI 1 is CSI corresponding to the first antenna set, and the CSI 2 is CSI corresponding to the second antenna set. The network device determines a codeword 1 (codeword 1, CW 1) and a CW 2 respectively based on a channel quality indicator 1 (channel quality indicator 1, CQI 1), a CQI 2, a rank indicator 1 (rank indicator, RI 1), and an RI 2 in the CSI 1 and the CSI 2 that are fed back, where the RI 1 indicates a quantity of layers included in a codeword corresponding to the first antenna set, the RI 2 indicates a quantity of layers included in a codeword corresponding to the second antenna set, the CQI 1 indicates a modulation order of the codeword corresponding to the first antenna set, and the CQI 2 indicates a modulation order of the codeword corresponding to the second antenna set. Then, the network device sends the CW 1 and the CW 2 to the terminal device, where the CW 1 is the codeword corresponding to the first antenna set, and the CW 2 is the codeword corresponding to the second antenna set. The terminal device feeds back hybrid automatic repeat request 1 (hybrid automatic repeat request 1, HARQ 1) information and a HARQ 2 to the network device, where the HARQ 1 is a HARQ corresponding to the first antenna set, and the HARQ 2 is a HARQ corresponding to the second antenna set.

(1) Terminal device: The terminal device includes a device that provides a voice and/or data connectivity for a user. Specifically, the terminal device includes a device that provides a voice for the user, includes a device that provides data connectivity for the user, or includes a device that provides a voice and data connectivity for the user. For example, the terminal device may include a handheld device having a wireless connection function or a processing device connected to a wireless modem. The terminal device may communicate with a core network through a radio access network (radio access network, RAN), and exchange a voice or data with the RAN, or exchange a voice and data with the RAN. The terminal device may include a user equipment (user equipment, UE), a wireless terminal device, a mobile terminal device, a device-to-device (device-to-device, D2D) communication terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a light terminal device (light UE), a reduced capability user equipment (reduced capability UE, REDCAP UE), a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, a portable, pocket-sized, handheld, or a computer-embedded mobile apparatus, or the like. For example, the terminal device may be a device like a personal communication service (personal communication service, PCS) phone, a cordless phone, a session initiation protocol (session initiation protocol, SIP) phone, a wireless local loop (wireless local loop, WLL) station, or a personal digital assistant (personal digital assistant, PDA). The terminal device further includes a limited device, for example, a device with low power consumption, a device with a limited storage capability, or a device with a limited computing capability. For example, the terminal device includes an information sensing device like a barcode, a radio frequency identification (radio frequency identification, RFID), a sensor, a global positioning system (global positioning system, GPS), or a laser scanner.

By way of example and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of the user. The wearable device is not only a hardware device, but also implements a powerful function through software support, data exchange, and cloud interaction. In a broad sense, the wearable intelligent device includes a full-featured and large-sized device that can implement all or some functions without depending on a smartphone, for example, a smart watch or smart glasses, and includes a device that is dedicated to only one type of application function and needs to collaboratively work with another device like the smartphone, for example, various smart bands, smart helmets, or smart jewelry for monitoring physical signs.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs).

In embodiments of this application, the terminal device may further include a relay (relay). Alternatively, it is understood as that any device that can perform data communication with a base station may be considered as a terminal device.

(2) Network device: The network device includes, for example, an access network (access network, AN) device like a base station (for example, an access point), and may be a device that communicates with a wireless terminal device over an air interface in an access network through one or more cells. Alternatively, for example, a network device in a vehicle-to-everything (vehicle-to-everything, V2X) technology is a road side unit (road side unit, RSU). The base station may be configured to: perform mutual conversion between a received over-the-air frame and an IP packet, and serve as a router between the terminal device and a remaining part of the access network. The remaining part of the access network may include an IP network. The RSU may be a fixed infrastructure entity supporting a V2X application, and may exchange a message with another entity supporting the V2X application. The network device may further coordinate attribute management of the air interface. For example, the network device may include an evolved NodeB (NodeB, eNB, or e-NodeB, evolved NodeB) in a long term evolution (long term evolution, LTE) system or a long term evolution-advanced (long term evolution-advanced, LTE-A) system, may include a next generation NodeB (next generation NodeB, gNB) in a 5th generation (the 5th generation, 5G) mobile communication technology NR system (also referred to as an NR system for short), or may include a central unit (central unit, CU) and a distributed unit (distributed unit, DU) in a cloud access network (cloud radio access network, Cloud RAN) system. This is not limited in embodiments of this application.

The network device may further include a core network device. The core network device includes, for example, an access and mobility management function (access and mobility management function, AMF), a user plane function (user plane function, UPF), or a session management function (session management function, SMF).

Some terms in this application are first described, to help a person skilled in the art have a better understanding.

(1) Sounding reference signal SRS

The SRS is a reference signal sent by the terminal device in an uplink direction. In the NR system, the network device may obtain uplink channel information by using the SRS. In a TDD system, the network device may further obtain downlink channel information by measuring the SRS by using channel reciprocity. In addition to obtaining the uplink (downlink) channel information by using the SRS, the network device may further use the SRS to perform uplink beam management, including beam training, beam switching, and the like.

(2) Antenna port (antenna port)

The antenna port may also be referred to as a port for short. A virtual antenna is a transmit antenna identified by a receiving-end device or a transmit antenna that can be distinguished in space. One antenna port may be configured for each virtual antenna, the virtual antenna may be a weighted combination of a plurality of physical antennas, and each antenna port may correspond to one reference signal port.

Each SRS resource includes $N_{\mathrm{ap}}^{\mathrm{SRS}} \in \{1,2,4,8\}$ SRS ports. An existing standard and protocol support a maximum of only four SRS ports included in each SRS resource. Embodiments of this application include a design for a case in which there are eight SRS ports. Each SRS port corresponds to a specific time-frequency code resource. In an ideal case, the SRS ports are orthogonal. Each SRS port corresponds to a physical antenna or a virtual antenna of the terminal device.

It should be understood that different antenna ports in one SRS resource may occupy completely same symbols, and are multiplexed through frequency division (occupying different subcarriers) or code division (using different ZC (Zadoff-chu) sequences or different cyclic shifts of a same sequence). There is a correspondence between the reference signal resource and the reference signal. For a specific correspondence, refer to descriptions in the existing standard. Further, in some scenarios, the reference signal resource and the reference signal may be equivalent.

(3) Channel state information reference signal CSI-RS

In the NR system, the CSI-RS is mainly used in the following several aspects: (1) Channel state information obtaining. The CSI-RS is used to measure a channel between the network device and the terminal device, and obtain channel state information needed for scheduling and link adaptation, for example, a precoding matrix and channel quality information. (2) Beam management. The CSI-RS is used to obtain beamforming weights on a terminal device side and a network device side, to support beam measurement in a beam management process. (3) Time-frequency tracking. In the system, precise tracking of time-frequency synchronization is implemented by setting a tracking reference signal (tracking reference signal, TRS). (4) Mobility management. In the system, a measurement requirement related to mobility management of the terminal device is completed by obtaining and tracking CSI-RS signals of a current cell and a neighboring cell. (5) Rate matching.

(4) 8R receiver device

FIG. 4 is a diagram of a structure of an 8R receiver device according to an embodiment of this application. The 8R receiver device includes eight receive antennas. It is assumed that a DMRS signal is S, and a received signal of the receiver device is y=HVS+n, where H is a channel, and V is a precoding matrix. After receiving the received signal, the receiver device performs processing on the received signal, including 8-port channel estimation, 8R interference whitening, an 8R minimum mean squared error (minimum mean squared error, MMSE)/maximum likelihood detection (maximum likelihood detection, MLD) receiver, and decoding. FIG. 5 is a diagram of a downlink receiving and sending procedure of an 8R receiver device according to an embodiment of this application. Details are as follows: The 8R receiver device may send an SRS to a network device. The network device performs CSI measurement based on the SRS, and determines a CSI-RS based on a measurement result. The network device sends the CSI-RS to the 8R receiver device. The 8R receiver device determines a measurement indicator based on the CSI-RS, and sends CSI to the network device. The network device determines a CW based on a CQI in the fed-back CSI, and then sends the codeword to the 8R receiver device. The 8R receiver device feeds back HARQ information to the network device. When the 8R receiver device sends the SRS to the network device, the 8R receiver device sends 8 ports of SRSs or X ports of precoded (precoded) SRSs, where X is less than or equal to 8. When the network device sends the CSI-RS to the 8R receiver device, the network device may configure one reporting setting (reporting setting) for the 8R receiver device. One reporting setting is associated with one CSI-RS. The reporting setting includes one set of RI, precoding matrix indicator (precoding matrix indicator, PMI), and CQI that correspond to the 8R receiver device. A maximum of two CQIs correspond to the 8R receiver device because the 8R receiver device can perform transmission of a maximum of eight transmitted data streams (two CWs). PDSCH transmission: A correspondence between the data stream and the codeword is agreed on in a protocol. To be specific, when a quantity of transmitted data streams is less than or equal to 4, single-codeword transmission is performed; or when a quantity of transmitted data streams is greater than 4, dual-codeword transmission is performed.

(5) Demodulation reference signal DMRS

The demodulation reference signal (demodulation reference signal, DMRS) is a reference signal used by a receiving end to perform equivalent channel estimation, and is used to estimate an equivalent channel matrix of a data channel, for example, a PDSCH, a physical uplink shared channel (physical uplink shared channel, PUSCH), or a physical downlink control channel (physical downlink control channel, PDCCH), so as to be used for data detection and demodulation. The data channel PDSCH is used as an example. Same precoding is usually performed on the DMRS and a sent data signal, to ensure that the DMRS and data pass through a same equivalent channel. It is assumed that a vector of a DMRS sent by a transmitting end is s, a vector of a sent data symbol is x, a same precoding operation (a same precoding matrix $P$ is used) is performed on the DMRS and data, and corresponding received signal vectors of the receiving end may be represented as:

$$\text{Data: } \boldsymbol{y} = \boldsymbol{HPx} + \boldsymbol{n} = \widetilde{\boldsymbol{H}}\boldsymbol{x} + \boldsymbol{n}$$

$$\text{DMRS: } \boldsymbol{r} = \boldsymbol{HPs} + \boldsymbol{n} = \widetilde{\boldsymbol{H}}\boldsymbol{s} + \boldsymbol{n}$$

$y$ represents received data of the receiving end, $H$ represents a channel, $P$ represents the precoding matrix, $x$ represents the sent data symbol, $n$ represents noise, $\tilde{H}$ represents an equivalent channel, r represents a DMRS signal of the receiving end, and s represents the sent DMRS signal.

It can be learned that, for both the data signal and the DMRS, equivalent channels that the data signal and the DMRS pass through are $\tilde{H}$. The receiving end may obtain estimation of the equivalent channel $\tilde{H}$ based on the known DMRS vector s by using a channel estimation algorithm (for example, MMSE channel estimation). Equalization and subsequent demodulation of the data signal may be completed based on the equivalent channel.

The DMRS is used to estimate the equivalent channel $\tilde{H}$, and a dimension of the equivalent channel is $N_R \times R$, where $N_R$ is a quantity of receive antennas, and R is a quantity of transmitted data streams (also referred to as a quantity of transport layers, a quantity of spatial layers, or a rank). Usually, one DMRS port corresponds to one spatial layer. For multiple input multiple output (multiple input multiple output, MIMO) transmission whose quantity of transmitted data streams is R, a quantity of needed DMRS ports is R. To ensure channel estimation quality, different DMRS ports are usually orthogonal ports. DMRS symbols corresponding to different DMRS ports are orthogonal in frequency domain, time-frequency domain, or code domain.

Because the DMRS occupies a time-frequency resource, DMRS overheads need to be reduced as much as possible. To reduce mutual interference, DMRS resources corresponding to a plurality of DMRS ports are usually mapped to a preset time-frequency resource in a frequency division multiplexing, time division multiplexing, or code division multiplexing manner. Currently, NR supports two DMRS resource mapping types. A type 1 (Type 1) DMRS may support a maximum of eight orthogonal ports. A type 2 (Type 2) DMRS may support a maximum of 12 orthogonal ports. For one DMRS port, to perform channel estimation on different time-frequency resources and ensure channel estimation quality, a plurality of DMRS symbols need to be sent on a plurality of time-frequency resources. The DMRS may occupy at least one OFDM symbol in time domain, and bandwidth occupied in frequency domain is the same as scheduled bandwidth of a scheduled data signal. A plurality of DMRS symbols corresponding to one port correspond to one reference signal sequence, and the reference signal sequence includes a plurality of reference signal sequence elements. A DMRS reference signal sequence may be a gold sequence.

For example, the DMRS reference signal sequence is the gold sequence. An $n^{th}$ element in the reference signal sequence may be generated according to the following formula:

$$r(n) = \frac{1}{\sqrt{2}}\big(1 - 2c(2n)\big) + j\frac{1}{\sqrt{2}}\big(1 - 2c(2n + 1)\big)$$

A pseudo-random sequence $c(n)$ may be a gold sequence whose sequence length is 31. For a sequence $c(n)$ whose output length is $M_{PN}$, $n = 0, 1, \cdots M_{PN} - 1$, which may be defined as follows:

$$c(n) = \big(x_1(n + N_c) + x_2(n + N_c)\big) \bmod 2$$

$$x_1(n + 31) = (x_1(n + 3) + x_1(n)) \bmod 2$$

$$x_2(n + 31) = (x_2(n + 3) + x_2(n + 2) + x_2(n + 1) + x_2(n)) \bmod 2$$

$N_C = 1600$. A $1^{st}$ m-sequence $x_1(n)$ may be initialized to $x_1(0) = 1$, $x_1(n) = 0$, $n = 1, 2, \cdots, 30$. A $2^{nd}$ m-sequence $x_2(n)$

is initialized via a parameter $c_{\text{init}}$. $c_{\text{init}}$ may be defined as follows:

$$c_{\text{init}} = \left( 2^{17} \left( N_{\text{symb}}^{\text{slot}} n_{\text{s,f}}^{\mu} + l + 1 \right) \left( 2 N_{\text{ID}}^{\bar{n}_{\text{SCID}}^{\bar{\lambda}}} + 1 \right) + 2^{17} \left\lfloor \frac{\bar{\lambda}}{2} \right\rfloor + 2 N_{\text{ID}}^{\bar{n}_{\text{SCID}}^{\bar{\lambda}}} + \bar{n}_{\text{SCID}}^{\bar{\lambda}} \right) \bmod 2^{31}$$

Herein, $l$ represents an index of an OFDM symbol included in one slot, $n_{\text{s,f}}^{\mu}$ represents an index of a slot in one system frame, and $N_{\text{ID}}^0, N_{\text{ID}}^1 \in \{0,1, \dots ,65535\}$ may be configured by using higher layer signaling. $N_{\text{ID}}^{\bar{n}_{\text{SCID}}^{\bar{\lambda}}}$ is related to a cell ID (identification), and may be usually equal to the cell ID. $N_{\text{ID}}^{\bar{n}_{\text{SCID}}^{\bar{\lambda}}} = N_{\text{ID}}^{\text{cell}}$. $\bar{n}_{\text{SCID}}^{\bar{\lambda}}$ is an initialization parameter whose value may be 0 or 1. A specific determining formula is as follows, where λ represents an index of a code division multiplexing (code division multiplexing, CDM) group corresponding to the DMRS port. For adjacent DMRS frequency domain positions, different $\bar{n}_{\text{SCID}}^{\bar{\lambda}}$ may be used to reduce a peak to average power ratio (peak to average power ratio, PAPR).

$$\bar{n}_{\text{SCID}}^{\bar{\lambda}} = \begin{cases} n_{\text{SCID}}; & \lambda = 0 \text{ or } \lambda = 2; \\ 1 - n_{\text{SCID}}; & \lambda = 1; \end{cases}$$

When a DMRS sequence initialization indication field is configured in downlink control information (downlink control information, DCI), $n_{\text{SCID}} \in \{0, 1\}$ may be indicated by using the DCI. In other cases, a default value $n_{\text{SCID}} = 0$ is used.

According to a preset time-frequency resource mapping rule, a DMRS reference signal sequence corresponding to a port is multiplied by a corresponding cover code sequence and then mapped to a corresponding time-frequency resource. In a current NR protocol, two types of DMRS configuration manners are defined, and include a Type 1 DMRS and a Type 2 DMRS.

For a port $\boldsymbol{p}$, an $m^{\text{th}}$ reference sequence element r(m) in a corresponding reference signal sequence is mapped, according to the following rule, to a resource element (resource element, RE) whose index is $(k,l)_{p,u}$. The RE whose index is $(k,l)_{p,u}$ corresponds to an OFDM symbol whose index is $l$ in a slot in time domain, and corresponds to a subcarrier whose index is k in frequency domain. The mapping rule satisfies:

$$a_{k.l}^{(p,\mu)} = \beta_{PDSCH}^{DMRS} w_f(k') w_t(l') r(2n + k') \quad \text{Formula (1)}$$

$$k = \begin{cases} 4n + 2k' + \Delta, & \text{configuration type 1 ((Type 1 DMRS))} \\ 6n + k' + \Delta, & \text{configuration type 2 ((Type 2 DMRS))} \end{cases}$$

$$k' = 0,1$$

$$l = \bar{l} + l'$$

$$n = 0,1, \dots$$

$$l' = 0,1$$

$\mu$ is a subcarrier spacing parameter, $a_{k.l}^{(p,\mu)}$ is a DMRS modulation symbol corresponding to the port $\boldsymbol{p}$ mapped to the RE whose index is $(k, l)_{p,u}$, and $\bar{l}$ is a symbol index of a start OFDM symbol occupied by the DMRS modulation symbol or a symbol index of a reference OFDM symbol. $\beta_{PDSCH}^{DMRS}$ is a power scaling factor, $w_t(l')$ is a time domain cover code element corresponding to an OFDM symbol whose index is $l'$, $w_f(k')$ is a frequency domain cover code element corresponding to a subcarrier whose index is $k'$, $m = 2n + k'$, and $\Delta$ is a subcarrier offset factor.

In a configuration type 1 (Type 1 DMRS) mapping rule, values of $w_f(k')$, $w_t(l')$, and $\Delta$ that correspond to the DMRS port p may be determined according to Table 1. Table 1 is shown as follows:

Table 1

| p | $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 0 | 0 | +1 | +1 | +1 | -1 |
| 1005 | 0 | 0 | +1 | -1 | +1 | -1 |
| 1006 | 1 | 1 | +1 | +1 | +1 | -1 |
| 1007 | 1 | 1 | +1 | -1 | +1 | -1 |

In a configuration type 2 (Type 2 DMRS) mapping rule, values of $w_f(k')$, $w_t(l')$, and $\Delta$ that correspond to the DMRS port **p** may be determined according to Table 2. Table 2 is shown as follows:

Table 2

| p | $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 1000 | 0 | 0 | +1 | +1 | +1 | +1 |
| 1001 | 0 | 0 | +1 | -1 | +1 | +1 |
| 1002 | 1 | 2 | +1 | +1 | +1 | +1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |

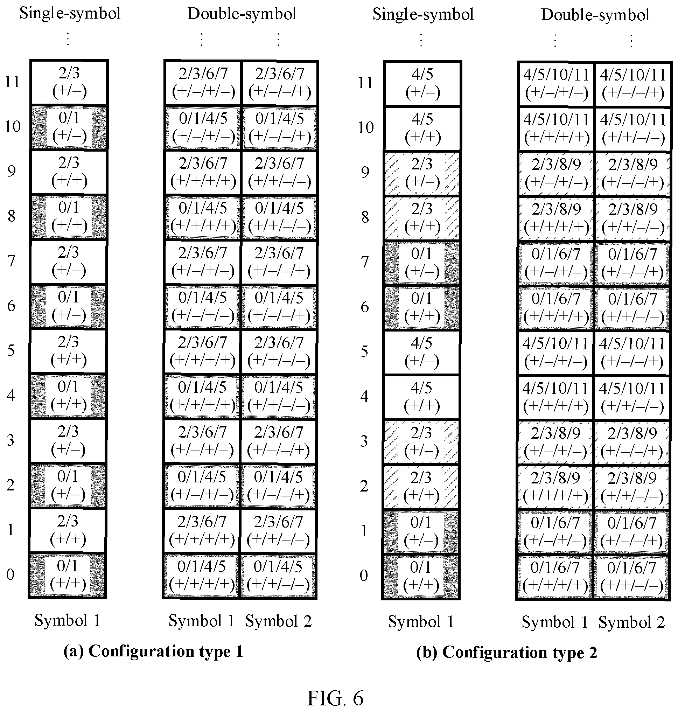

$\lambda$ is an index of a CDM group to which the port **p** belongs, and DMRS ports in a same orthogonal multiplexing group occupy a same time-frequency resource. According to the formula (1), a time-frequency resource mapping manner of the Type 1 DMRS is shown in (a) in FIG. 6. A single-symbol Type 1 DMRS (corresponding to $l' = 0$) supports a maximum of four ports, and a DMRS resource occupies one OFDM symbol. The four DMRS ports are divided into two code division multiplexing groups (CDM groups). A CDM group 0 includes a port 0 and a port 1; and a CDM group 1 includes a port 2 and a port 3. Frequency division multiplexing is performed between the CDM group 0 and the CDM group 1 (mapped to different frequency domain resources). DMRS ports included in the CDM group are mapped to a same time-frequency resource. Reference signals corresponding to the DMRS ports included in the CDM group are distinguished by using orthogonal cover codes (orthogonal cover codes, OCCs), to ensure orthogonality of the DMRS ports in the CDM group. This suppresses interference between DMRSs whose transmission is performed on different antenna ports. Specifically, the port 0 and the port 1 are in a same resource element (RE), and resource mapping is performed in a comb manner in frequency domain. In other words, adjacent frequency domain resources occupied by the port 0 and the port 1 are separated by one subcarrier. For one DMRS port, two adjacent occupied REs correspond to one OCC codeword sequence whose length is 2. For example, for a subcarrier 0 and a subcarrier 2, a group of OCC codeword sequences (+1+1 and +1-1) whose lengths are 2 are used for the port 0 and the port 1. Similarly, the port 2 and the port 3 are in a same resource element (RE), and are mapped, in a comb manner in frequency domain, to REs that are not occupied by the port 0 and the port 1. For a subcarrier 1 and a subcarrier 3, a group of OCC codeword sequences (+1+1 and +1-1) whose lengths are 2 are used for the port 2 and the port 3.

A double-symbol Type 1 DMRS supports a maximum of eight ports. The eight DMRS ports are divided into two code division multiplexing groups (CDM groups). A CDM group 0 includes a port 0, a port 1, a port 4, and a port 5; and a CDM group 1 includes a port 2, a port 3, a port 6, and a port 7. Frequency division multiplexing is performed between the CDM group 0 and the CDM group 1. Reference signals corresponding to DMRS ports included in the CDM group are distinguished by using OCCs. Specifically, the port 0, the port 1, the port 4, and the port 5 are in a same resource element (RE), and resource mapping is performed in a comb manner in frequency domain. In other words, adjacent frequency domain resources occupied by the port 0, the port 1, the port 4, and the port 5 are separated by one subcarrier. For one DMRS port, two adjacent occupied subcarriers and two OFDM symbols correspond to one OCC codeword sequence whose length is 4. For example, for a subcarrier 0 and a subcarrier 2 corresponding to an OFDM symbol 1 and an OFDM symbol 2, a group of OCC codes (+1+1+1+1/+1+1-1-1/+1-1+1-1/+1-1-1+1) whose lengths are 4 are used for the port 0, the port 1, the port 4, and the port 5. Similarly, the port 2, the port 3, the port 6, and the port 7 are in a same resource element (RE), and are mapped, in a comb manner in frequency domain, to subcarriers that are not occupied by the port 0, the port 1, the port 4, and the port 5. For a subcarrier 1 and a subcarrier 3 corresponding to the OFDM symbol 1 and the OFDM symbol 2, a group of OCC codes (+1+1+1+1/+1+1-1-1/+1-1+1-1/+1-1-1+1) whose lengths are 4 are used for the port 2, the port 3, the port 6, and the port 7.

For a configuration type (configuration type) 2, a time-frequency resource mapping manner is shown in (b) in FIG. 6. A single-symbol Type 2 DMRS supports a maximum of six ports. The six DMRS ports are divided into three code division multiplexing groups (CDM groups), frequency division multiplexing is performed between the CDM groups, and orthogonality of reference signals corresponding to DMRS ports included in the CDM is ensured by using OCCs. A CDM group 0 includes a port 0 and a port 1; a CDM group 1 includes a port 2 and a port 3; and a CDM group 2 includes a port 4 and a port 5. The frequency division multiplexing is performed between the CDM groups (mapped to different frequency domain resources). The reference signals corresponding to the DMRS ports included in the CDM group are mapped to a same time-frequency resource. The reference signals corresponding to the DMRS ports included in the CDM group are distinguished by using the OCCs. For one DMRS port, a DMRS reference signal corresponding to the DMRS port is mapped, in frequency domain, to a plurality of resource sub-blocks including two contiguous subcarriers, and adjacent resource sub-blocks are separated by four subcarriers in frequency domain. Specifically, the port 0 and the port 1 are in a same resource element (RE), and resource mapping is performed in a comb manner. For example, a frequency domain resource granularity is one RB. The port 0 and the port 1 occupy a subcarrier 0, a subcarrier 1, a subcarrier 6, and a subcarrier 7. The port 2 and the port 3 occupy a subcarrier 2, a subcarrier 3, a subcarrier 8, and a subcarrier 9. The port 4 and the port 5 occupy a subcarrier 4, a subcarrier 5, a subcarrier 10, and a subcarrier 11. Two DMRS ports included in one CDM group correspond, in two adjacent subcarriers, to OCC codeword sequences (+1+1 and +1-1) whose lengths are 2.

A double-symbol Type 2 DMRS supports a maximum of 12 ports. The 12 DMRS ports are divided into three CDM groups, frequency division multiplexing is performed between the CDM groups, and orthogonality of reference signals corresponding to DMRS ports included in the CDM is ensured by using OCCs. A CDM group 0 includes a port 0, a port 1, a port 6, and a port 7; a CDM group 1 includes a port 2, a port 3, a port 8, and a port 9; and a CDM group 2 includes a port 4, a port 5, a port 10, and a port 11. The frequency division multiplexing is performed between the CDM groups (mapped to different frequency domain resources). The reference signals corresponding to the DMRS ports included in the CDM group are mapped to a same time-frequency resource. The reference signals corresponding to the DMRS ports included in the CDM group are distinguished by using the OCCs. For one DMRS port, a DMRS reference signal corresponding to the DMRS port is mapped, in frequency domain, to a plurality of resource sub-blocks including two contiguous subcarriers, and adjacent resource sub-blocks are separated by four subcarriers in frequency domain. Specifically, ports included in one CDM group are in a same resource element (RE), and resource mapping is performed in a comb manner in frequency domain. For example, a frequency domain resource granularity is one RB. The port 0, the port 1, the port 6, and the port 7 occupy a subcarrier 0, a subcarrier 1, a subcarrier 6, and a subcarrier 7 that correspond to an OFDM symbol 1 and an OFDM symbol 2. The port 2, the port 3, the port 8, and the port 9 occupy a subcarrier 2, a subcarrier 3, a subcarrier 8, and a subcarrier 9 that correspond to the OFDM symbol 1 and the OFDM symbol 2. The port 4, the port 5, the port 10, and the port 11 occupy a subcarrier 4, a subcarrier 5, a subcarrier 10, and a subcarrier 11 that correspond to the OFDM symbol 1 and the OFDM symbol 2. Four DMRS ports included in one CDM group correspond, in two adjacent subcarriers corresponding to two OFDM symbols, to OCC codeword sequences (+1+1+1+1/+1+1-1-1/+1-1+1-1/+1-1-1+1) whose lengths are 4.

For different DMRS configuration types, the existing protocol specifies a correspondence between the codeword and the DMRS port, that is, a DMRS port invoking and allocation rule. In an R15 version, the DMRS is sent along with the PDSCH on a same DMRS port, a quantity of ports and a port number used by the DMRS are the same as those used by the PDSCH, and the quantity of ports and the port number are indicated in a PDCCH corresponding to the PDSCH. An indication field is Antenna port(s), and a size of the indication field is 4 to 6 bits, and is determined based on parameters: dmrs-Type and maxLength. Table 3 indicates that a DMRS type (dmrs-Type) is 1, a maximum length (maxLength) is 1, and the terminal device supports a maximum of four PDSCH DMRS ports (that is, ports 0 to 3 shown in a 3rd column), where the

parameter: dmrs-Type indicates a DMRS configuration type, and the parameter: maxLength indicates a maximum quantity of symbols of a front-loaded (front-loaded) DMRS. A value of the DMRS port is an abbreviation. To be specific, "0" indicates 1000 and "1" indicates 1001. In a 2nd column in Table 3, content "quantity of DMRS CDM groups without data (Number of DMRS CDM group(s) without data)" indicates that resources corresponding to DMRS ports in the quantity of CDM groups do not carry the PDSCH and the DMRS of the terminal device. Values 1, 2, and 3 of the "quantity of DMRS CDM groups without data" correspond to CDM groups {0}, {0, 1}, and {0, 1, 2} respectively. For example, when an index value is 0, a value of the "quantity of DMRS CDM groups without data" is 1, and the terminal device determines to use the CDM group {0} to receive information. It can be learned from Table 1 that ports corresponding to the CDM group {0} are 1000, 1001, 1004, and 1005. Based on content in the 3rd column in Table 3, the terminal device determines that the DMRS and the PDSCH that are sent by the network device to the terminal device are currently carried only on a time-frequency resource corresponding to the port 1000.

Table 3

| Single codeword (One Codeword): A codeword 0 is enabled (Codeword 0 enabled), and a codeword 1 is disabled (Codeword 1 disabled) | | |
|---|---|---|
| Index value (value) | Quantity of DMRS CDM groups without data | DMRS port (port) |
| 0 | 1 | 0 |
| 1 | 1 | 1 |
| 2 | 1 | 0 and 1 |
| 3 | 2 | 0 |
| 4 | 2 | 1 |
| 5 | 2 | 2 |
| 6 | 2 | 3 |
| 7 | 2 | 0 and 1 |
| 8 | 2 | 2 and 3 |
| 9 | 2 | 0 to 2 |
| 10 | 2 | 0 to 3 |
| 11 | 2 | 0 and 2 |
| 12 to 15 | Reserved | Reserved |

Table 3 corresponds to a case in which the network device is configured for using the single codeword for sending. In this case, the codeword 0 is enabled, and the codeword 1 is disabled. When the network device is configured for using two codewords for sending, as shown in a port configuration in Table 4, Table 4 indicates that a DMRS type (dmrs-Type) is 1, a maximum length (maxLength) is 2, and the terminal device supports a maximum of eight PDSCH DMRS ports (that is, ports 0 to 7 shown in a 3rd column). Table 4 indicates that the DMRS type (dmrs-Type) is 1, the maximum length (maxLength) is 2, and the terminal device supports the maximum of eight PDSCH DMRS ports (that is, the ports 0 to 7 shown in the 3rd column). A value of the DMRS port is an abbreviation. To be specific, "0" indicates 1000 and "1" indicates 1001.

When Table 4 is configured for the terminal device by the network device (that is, in a case in which the network device can use at most two codewords to send the PDSCH), the network device and the terminal device determine, depending on whether a quantity of currently actually used codewords is one codeword or two codewords, which part in Table 4 is to be used. When the network device and the terminal device use one codeword for transmission, content on the left of Table 4 is used. When the network device and the terminal device use two codewords for transmission, content on the right of Table 4 is used.

Table 4

| Single codeword (One Codeword): A codeword 0 is enabled (Codeword 0 enabled), and a codeword 1 is disabled (Codeword 1 disabled) | | | | Dual codewords (One Codeword): The codeword 0 is enabled (Codeword 0 enabled), and the codeword 1 is enabled (Codeword 1 enabled) | | | |
|---|---|---|---|---|---|---|---|
| Index value (value) | Quantity of DMRS CDM groups without data | DMRS port (port) | Quantity of front-load symbols (Number of front-load symbols) | Index value (value) | Quantity of DMRS CDM groups without data | DMRS port (port) | Quantity of front-load symbols |
| 0 | 1 | 0 | 1 | 0 | 2 | 0 to 4 | 2 |
| 1 | 1 | 1 | 1 | 1 | 2 | 0, 1, 2, 3, 4, and 6 | 2 |
| 2 | 1 | 0 and 1 | 1 | 2 | 2 | 0, 1, 2, 3, 4, 5, and 6 | 2 |
| 3 | 2 | 0 | 1 | 3 | 2 | 0, 1, 2, 3, 4, 5, 6, and 7 | 2 |
| 4 | 2 | 1 | 1 | 4 to 31 | Reserved | Reserved | Reserved |
| 5 | 2 | 2 | 1 | | | | |
| 6 | 2 | 3 | 1 | | | | |
| 7 | 2 | 0 and 1 | 1 | | | | |
| 8 | 2 | 2 and 3 | 1 | | | | |
| 9 | 2 | 0 to 2 | 1 | | | | |
| 10 | 2 | 0 to 3 | 1 | | | | |
| 11 | 2 | 0 and 2 | 1 | | | | |
| 12 | 2 | 0 | 2 | | | | |
| 13 | 2 | 1 | 2 | | | | |
| 14 | 2 | 2 | 2 | | | | |
| 15 | 2 | 3 | 2 | | | | |
| 16 | 2 | 4 | 2 | | | | |
| 17 | 2 | 5 | 2 | | | | |
| 18 | 2 | 6 | 2 | | | | |
| 19 | 2 | 7 | 2 | | | | |
| 20 | 2 | 0 and 1 | 2 | | | | |
| 21 | 2 | 2 and 3 | 2 | | | | |
| 22 | 2 | 4 and 5 | 2 | | | | |
| 23 | 2 | 6 and 7 | 2 | | | | |
| 24 | 2 | 0 and 4 | 2 | | | | |
| 25 | 2 | 2 and 6 | 2 | | | | |
| 26 | 2 | 0, 1, and 4 | 2 | | | | |
| 27 | 2 | 2, 3, and 6 | 2 | | | | |
| 28 | 2 | 0, 1, 4, and 5 | 2 | | | | |
| 29 | 2 | 2, 3, 6, and 7 | 2 | | | | |

(continued)

| Single codeword (One Codeword): A codeword 0 is enabled (Codeword 0 enabled), and a codeword 1 is disabled (Codeword 1 disabled) | | | | Dual codewords (One Codeword): The codeword 0 is enabled (Codeword 0 enabled), and the codeword 1 is enabled (Codeword 1 enabled) | | | |
|---|---|---|---|---|---|---|---|
| Index value (value) | Quantity of DMRS CDM groups without data | DMRS port (port) | Quantity of front-load symbols (Number of front-load symbols) | Index value (value) | Quantity of DMRS CDM groups without data | DMRS port (port) | Quantity of front-load symbols |
| 30 | 2 | 0, 2, 4, and 6 | 2 | | | | |
| 31 | Reserved | Reserved | Reserved | | | | |

The following further provides examples of two DMRS port configurations. For example, Table 5 indicates that a DMRS type (dmrs-Type) is 2, a maximum length (maxLength) is 1, and the terminal device supports a maximum of six PDSCH DMRS ports (that is, ports 0 to 5 shown in a 3rd column). A value of the DMRS port is an abbreviation. To be specific, "0" indicates 1000 and "1" indicates 1001. Meanings of parameters in Table 5 are the same as meanings of the corresponding parameters in Table 3 and Table 4.

Table 5

| Single codeword (One Codeword): A codeword 0 is enabled (Codeword 0 enabled), and a codeword 1 is disabled (Codeword 1 disabled) | | | Dual codewords (One Codeword): The codeword 0 is enabled (Codeword 0 enabled), and the codeword 1 is enabled (Codeword 1 enabled) | | |
|---|---|---|---|---|---|
| Index value (value) | Quantity of DMRS CDM groups without data | DMRS port (port) | Index value (value) | Quantity of DMRS CDM groups without data | DMRS port (port) |
| 0 | 1 | 0 | 0 | 3 | 0 to 4 |
| 1 | 1 | 1 | 1 | 3 | 0 to 5 |
| 2 | 1 | 0 and 1 | 2 to 31 | Reserved | Reserved |
| 3 | 2 | 0 | | | |
| 4 | 2 | 1 | | | |
| 5 | 2 | 2 | | | |
| 6 | 2 | 3 | | | |
| 7 | 2 | 0 and 1 | | | |
| 8 | 2 | 2 and 3 | | | |
| 9 | 2 | 0 to 2 | | | |
| 10 | 2 | 0 to 3 | | | |
| 11 | 3 | 0 | | | |
| 12 | 3 | 1 | | | |
| 13 | 3 | 2 | | | |
| 14 | 3 | 3 | | | |
| 15 | 3 | 4 | | | |
| 16 | 3 | 5 | | | |
| 17 | 3 | 0 and 1 | | | |
| 18 | 3 | 2 and 3 | | | |
| 19 | 3 | 4 and 5 | | | |

(continued)

| Single codeword (One Codeword): A codeword 0 is enabled (Codeword 0 enabled), and a codeword 1 is disabled (Codeword 1 disabled) | | | Dual codewords (One Codeword): The codeword 0 is enabled (Codeword 0 enabled), and the codeword 1 is enabled (Codeword 1 enabled) | | |
|---|---|---|---|---|---|
| Index value (value) | Quantity of DMRS CDM groups without data | DMRS port (port) | Index value (value) | Quantity of DMRS CDM groups without data | DMRS port (port) |
| 20 | 3 | 0 to 2 | | | |
| 21 | 3 | 3 to 5 | | | |
| 22 | 3 | 0 to 3 | | | |
| 23 | 2 | 0 and 2 | | | |
| 24 to 31 | Reserved | Reserved | | | |

Table 6 indicates that a DMRS type (dmrs-Type) is 2, a maximum length (maxLength) is 2, and the terminal device supports a maximum of 12 PDSCH DMRS ports (that is, ports 0 to 11 shown in a 3rd column). A value of the DMRS port is an abbreviation. To be specific, "0" indicates 1000 and "1" indicates 1001. Meanings of parameters in Table 6 are the same as meanings of the corresponding parameters in Table 3 and Table 4.

Table 6

| Single codeword (One Codeword): A codeword 0 is enabled (Codeword 0 enabled), and a codeword 1 is disabled (Codeword 1 disabled) | | | | Dual codewords (One Codeword): The codeword 0 is enabled (Codeword 0 enabled), and the codeword 1 is enabled (Codeword 1 enabled) | | | |
|---|---|---|---|---|---|---|---|
| Index value (value) | Quantity of DMRS CDM groups without data | DMRS port (port) | Quantity of front-load symbols (Number of front-load symbols) | Index value (value) | Quantity of DMRS CDM groups without data | DMRS port (port) | Quantity of front-load symbols |
| 0 | 1 | 0 | 1 | 0 | 3 | 0 to 4 | 1 |
| 1 | 1 | 1 | 1 | 1 | 3 | 0 to 5 | 1 |
| 2 | 1 | 0 and 1 | 1 | 2 | 2 | 0, 1, 2, 3, and 6 | 2 |
| 3 | 2 | 0 | 1 | 3 | 2 | 0, 1, 2, 3, 6, and 8 | 2 |
| 4 | 2 | 1 | 1 | 4 | 2 | 0, 1, 2, 3, 6, 7, and 8 | 2 |
| 5 | 2 | 2 | 1 | 5 | 2 | 0, 1, 2, 3, 6, 7, 8, and 9 | 2 |
| 6 | 2 | 3 | 1 | 6 to 63 | Reserved | Reserved | Reserved |
| 7 | 2 | 0 and 1 | 1 | | | | |
| 8 | 2 | 2 and 3 | 1 | | | | |
| 9 | 2 | 0 to 2 | 1 | | | | |
| 10 | 2 | 0 to 3 | 1 | | | | |
| 11 | 3 | 0 | 1 | | | | |
| 12 | 3 | 1 | 1 | | | | |
| 13 | 3 | 2 | 1 | | | | |
| 14 | 3 | 3 | 1 | | | | |

(continued)

| Single codeword (One Codeword): A codeword 0 is enabled (Codeword 0 enabled), and a codeword 1 is disabled (Codeword 1 disabled) | | | | Dual codewords (One Codeword): The codeword 0 is enabled (Codeword 0 enabled), and the codeword 1 is enabled (Codeword 1 enabled) | | | |
|---|---|---|---|---|---|---|---|
| Index value (value) | Quantity of DMRS CDM groups without data | DMRS port (port) | Quantity of front-load symbols (Number of front-load symbols) | Index value (value) | Quantity of DMRS CDM groups without data | DMRS port (port) | Quantity of front-load symbols |
| 15 | 3 | 4 | 1 | | | | |
| 16 | 3 | 5 | 1 | | | | |
| 17 | 3 | 0 and 1 | 1 | | | | |
| 18 | 3 | 2 and 3 | 1 | | | | |
| 19 | 3 | 4 and 5 | 1 | | | | |
| 20 | 3 | 0 to 2 | 1 | | | | |
| 21 | 3 | 3 to 5 | 1 | | | | |
| 22 | 3 | 0 to 3 | 1 | | | | |
| 23 | 2 | 0 and 2 | 1 | | | | |
| 24 | 3 | 0 | 2 | | | | |
| 25 | 3 | 1 | 2 | | | | |
| 26 | 3 | 2 | 2 | | | | |
| 27 | 3 | 3 | 2 | | | | |
| 28 | 3 | 4 | 2 | | | | |
| 29 | 3 | 5 | 2 | | | | |
| 30 | 3 | 6 | 2 | | | | |
| 31 | 3 | 7 | 2 | | | | |
| 32 | 3 | 8 | 2 | | | | |
| 33 | 3 | 9 | 2 | | | | |
| 34 | 3 | 10 | 2 | | | | |
| 35 | 3 | 11 | 2 | | | | |
| 36 | 3 | 0 and 1 | 2 | | | | |
| 37 | 3 | 2 and 3 | 2 | | | | |
| 38 | 3 | 4 and 5 | 2 | | | | |
| 39 | 3 | 6 and 7 | 2 | | | | |
| 40 | 3 | 8 and 9 | 2 | | | | |
| 41 | 3 | 10 and 11 | 2 | | | | |
| 42 | 3 | 0, 1, and 6 | 2 | | | | |
| 43 | 3 | 2, 3, and 8 | 2 | | | | |
| 44 | 3 | 4, 5, and 10 | 2 | | | | |
| 45 | 3 | 0, 1, 6, and 7 | 2 | | | | |
| 46 | 3 | 2, 3, 8, and 9 | 2 | | | | |

(continued)

| Single codeword (One Codeword): A codeword 0 is enabled (Codeword 0 enabled), and a codeword 1 is disabled (Codeword 1 disabled) | | | | Dual codewords (One Codeword): The codeword 0 is enabled (Codeword 0 enabled), and the codeword 1 is enabled (Codeword 1 enabled) | | | |
|---|---|---|---|---|---|---|---|
| Index value (value) | Quantity of DMRS CDM groups without data | DMRS port (port) | Quantity of front-load symbols (Number of front-load symbols) | Index value (value) | Quantity of DMRS CDM groups without data | DMRS port (port) | Quantity of front-load symbols |
| 47 | 3 | 4, 5, 10, and 11 | 2 | | | | |
| 48 | 1 | 0 | 2 | | | | |
| 49 | 1 | 1 | 2 | | | | |
| 50 | 1 | 6 | 2 | | | | |
| 51 | 1 | 7 | 2 | | | | |
| 52 | 1 | 0 and 1 | 2 | | | | |
| 53 | 1 | 6 and 7 | 2 | | | | |
| 54 | 2 | 0 and 1 | 2 | | | | |
| 55 | 2 | 2 and 3 | 2 | | | | |
| 56 | 2 | 6 and 7 | 2 | | | | |
| 57 | 2 | 8 and 9 | 2 | | | | |
| 58 to 63 | Reserved | Reserved | Reserved | | | | |

When multi-path transmission is performed (a quantity of transmitted data streams is greater than 4), implementation difficulty and computing complexity for a conventional 8R receiver device are high. Therefore, the 8R receiver may be split into two "virtual UEs" including 4R. For example, a 1st to a 4th receive antennas correspond to a virtual UE 1, a 5th to an 8th antennas correspond to a virtual UE 2, and each "virtual UE" receives and processes a signal. This can effectively resolve problems of the high implementation difficulty and the high computing complexity for the 8R receiver device. However, there is no design for this splitting solution in a current standard and protocol, and a transmission requirement of a receiver architecture in which the 8R receiver is split into the two "virtual UEs" including 4R cannot be met. To resolve the foregoing problems, embodiments of this application provide the following solutions.

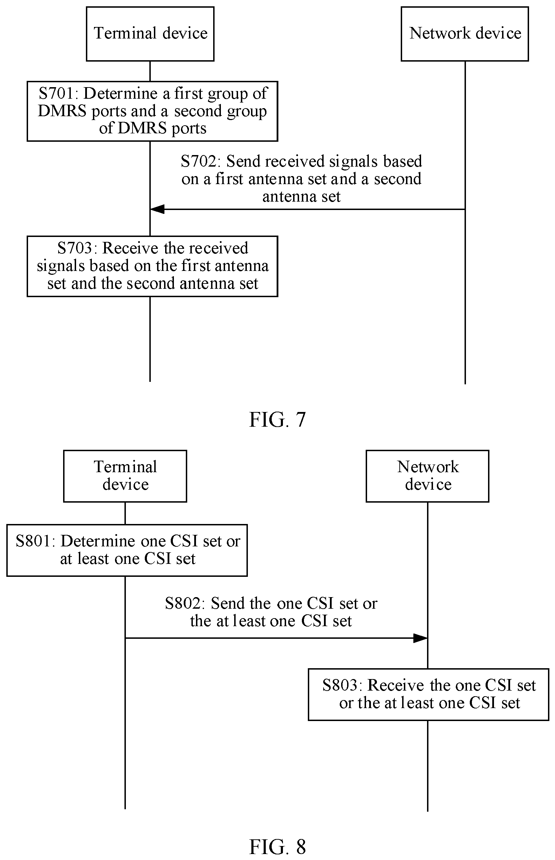

FIG. 7 shows a communication method according to an embodiment of this application. The method includes but is not limited to the following steps.

Step S701: A terminal device determines a first group of DMRS ports and a second group of DMRS ports.

That the terminal device determines the first group of DMRS ports and the second group of DMRS ports may be understood as that the terminal device divides used DMRS ports into two groups: the first group of DMRS ports and the second group of DMRS ports. The first group of DMRS ports include at least one DMRS port, and the second group of DMRS ports include at least one DMRS port. An intersection set between the DMRS port included in the first group of DMRS ports and the DMRS port included in the second group of DMRS ports is empty. In an example, when a network device is configured for using two codewords for sending, a DMRS type (dmrs-Type) is 1, a maximum length (maxLength) is 2, and the terminal device supports a maximum of eight PDSCH DMRS ports. When an index value is 0, the DMRS ports used by the terminal device include {DMRS port 0, DMRS port 1, DMRS port 2, DMRS port 3, DMRS port 4}, and the terminal device determines that the first group of DMRS ports include {DMRS port 2, DMRS port 3}, and the second group of DMRS ports include {DMRS port 0, DMRS port 1, DMRS port 4}. A value of the DMRS port is an abbreviation. For example, the DMRS port 2 represents a DMRS port 1002, and the DMRS port 3 represents a DMRS port 1003.

The first group of DMRS ports correspond to a first antenna set, the second group of DMRS ports correspond to a second antenna set, the terminal device corresponds to M antenna identifiers, the first antenna set corresponds to a part of the M antenna identifiers, and the second antenna set corresponds to the other part of the M antenna identifiers. The first antenna set includes at least one antenna, the second antenna set includes at least one antenna, and an intersection set between the first antenna set and the second antenna set is empty.

The M antenna identifiers include an SRS antenna port number and/or an antenna number. There is a correspondence between the SRS antenna port number and the antenna, and the correspondence may be a one-to-one correspondence or a one-to-many correspondence. In an example, there is a one-to-one correspondence between the SRS antenna port number and the antenna. One SRS resource set includes eight SRS ports, and antenna port numbers of the eight SRS ports are a port 1 to a port 8. In other words, SRS antenna port numbers are the port 1 to the port 8. The terminal device has eight antennas: a $1^{st}$ antenna to an $8^{th}$ antenna. The SRS antenna port numbers are the port 1 to the port 8 respectively corresponding to the $1^{st}$ antenna to the $8^{th}$ antenna. In another example, there is a one-to-many correspondence between the SRS antenna port number and the antenna. One SRS resource set includes eight SRS ports, and antenna port numbers of the eight SRS ports are a port 1 to a port 8. In other words, SRS antenna port numbers are the port 1 to the port 8. The terminal device has 16 antennas: a $1^{st}$ antenna to a $16^{th}$ antenna. An SRS antenna port number is the port 1 corresponding to the $1^{st}$ antenna and a $2^{nd}$ antenna. An SRS antenna port number is a port 2 corresponding to a $3^{rd}$ antenna and a $4^{th}$ antenna. An SRS antenna port number is a port 3 corresponding to a $5^{th}$ antenna and a $6^{th}$ antenna. By analogy, an SRS antenna port number is the port 8 corresponding to a $15^{th}$ antenna and the $16^{th}$ antenna.

Optionally, M may be equal to 8. In an example, the eight antenna identifiers include eight SRS antenna port numbers, and the antenna port numbers of eight SRS ports are a port 1 to a port 8. The terminal device has eight antennas: a $1^{st}$ antenna to an $8^{th}$ antenna. There is a one-to-one correspondence between the SRS antenna port numbers and the antennas. In other words, the SRS antenna port numbers are the port 1 to the port 8 respectively corresponding to the $1^{st}$ antenna to the $8^{th}$ antenna. Optionally, the first antenna set corresponds to four antenna identifiers, that is, four SRS antenna port numbers: the port 1 to a port 4, and the SRS antenna port numbers are the port 1 to the port 4 respectively corresponding to the $1^{st}$ antenna to a $4^{th}$ antenna. In this case, the first antenna set may include the $1^{st}$ antenna to the $4^{th}$ antenna. Correspondingly, the second antenna set corresponds to four antenna identifiers, that is, four SRS antenna port numbers: a port 5 to the port 8, and the SRS antenna port numbers are the port 5 to the port 8 respectively corresponding to a $5^{th}$ antenna to the $8^{th}$ antenna. The second antenna set may include the $5^{th}$ antenna to the $8^{th}$ antenna. In another example, the eight antenna identifiers include eight antenna numbers. The terminal device has eight antennas: a $1^{st}$ antenna to an $8^{th}$ antenna. Optionally, the first antenna set may include the $1^{st}$ antenna to a $4^{th}$ antenna, and the second antenna set may include a $5^{th}$ antenna to the $8^{th}$ antenna.

It should be noted that the antenna provided in this embodiment of this application may be a physical antenna, or may be a virtual antenna. This is not limited in this embodiment of this application.

The first group of DMRS ports belong to a first CDM group, the second group of DMRS ports belong to a second CDM group, the first CDM group includes at least one CDM group, and the second CDM group includes at least one CDM group. The first CDM group may be different from the second CDM group. That is, it may be understood as that the CDM group included in the first CDM group is different from the CDM group included in the second CDM group. That is, an intersection set between a DMRS port in the CDM group included in the first CDM group and a DMRS port in the CDM group included in the second CDM group is empty. For example, the first CDM group includes one CDM group, the CDM group is a CDM group 1, the second CDM group includes one CDM group, and the CDM group is a CDM group 0. The CDM group 1 is different from the CDM group 0. An intersection set between a DMRS port included in the CDM group 1 and a DMRS port included in the CDM group 0 is empty. DMRS ports included in the first group of DMRS ports are all or a part of DMRS ports included in the at least one CDM group included in the first CDM group. That is, it may be understood as that a quantity of the DMRS ports included in the at least one CDM group included in the first CDM group is greater than or equal to a quantity of DMRS ports included in the first group of DMRS ports. Correspondingly, DMRS ports included in the second group of DMRS ports are all or a part of DMRS ports included in the at least one CDM group included in the second CDM group. That is, it may be understood as that a quantity of the DMRS ports included in the at least one CDM group included in the second CDM group is greater than or equal to a quantity of DMRS ports included in the second group of DMRS ports.

In an example, as shown in Table 7, when the network device is configured for using two codewords for sending, a DMRS type (dmrs-Type) is 1, a maximum length (maxLength) is 2, and the terminal device supports a maximum of eight PDSCH DMRS ports. When an index value is 0, the terminal device determines that the first group of DMRS ports include {DMRS port 2, DMRS port 3}, and the second group of DMRS ports include {DMRS port 0, DMRS port 1, DMRS port 4}. A value of the DMRS port is an abbreviation. For example, the DMRS port 2 represents a DMRS port 1002, and the DMRS port 3 represents a DMRS port 1003. Because the network device is configured for using the two codewords for sending, and the DMRS type (dmrs-Type) is 1, a double-symbol Type 1 DMRS supports a maximum of eight ports, and the eight DMRS ports are divided into two code division multiplexing groups (CDM groups). A CDM group 0 includes a DMRS port 0, a DMRS port 1, a DMRS port 4, and a DMRS port 5; and a CDM group 1 includes a DMRS port 2, a DMRS port 3, a DMRS port 6, and a DMRS port 7. The first CDM group includes one CDM group, the CDM group is the CDM group 1, and the CDM group 1 includes the DMRS port 2, the DMRS port 3, the DMRS port 6, and the DMRS port 7. The second CDM group includes one CDM group, the CDM group is the CDM group 0, and the CDM group 0 includes the DMRS port 0, the DMRS port 1, the DMRS port 4, and the DMRS port 5. The first group of DMRS ports include {DMRS port 2, DMRS port 3}, and the first group of DMRS ports belong to the first CDM group, that is, {DMRS port 2, DMRS port 3} belong to the CDM group 1, where the CDM group 1 includes the DMRS port 2, the DMRS port 3, the DMRS port 6, and the DMRS port 7. The second group of DMRS ports include {DMRS port 0, DMRS port 1, DMRS port 4}, and the second group of DMRS ports belong to the second CDM group, that is, {DMRS port 0, DMRS port 1, DMRS port 4} belong to the CDM group 0, where the CDM group 0 includes the DMRS port 0, the DMRS port 1, the DMRS port 4, and the DMRS port 5.

In the foregoing method, in a frequency division manner, a case in which the DMRS port included in the first group of DMRS ports and the DMRS port included in the second group of DMRS ports belong to a same CDM group is avoided, thereby avoiding strong interference impact of a codeword with high power on a codeword with low power in a downlink DMRS channel estimation process.

Table 7

| Index value (value) | Quantity of DMRS CDM groups without data | DMRS port (port) | Quantity of front-load symbols (Number of front-load symbols) | Quantity of transmitted data streams | |
|---|---|---|---|---|---|
| Dual codewords (One Codeword): A codeword 0 is enabled (Codeword 0 enabled), and a codeword 1 is enabled (Codeword 1 enabled) | | | | | |
| 0 | 2 | 2, 3, 0, 1, and 4 | 2 | 2+3 | Adjustment of a port sequence in a port configuration solution |
| 1 | 2 | 2, 3, 6, 0, 1, and 4 or 0, 1, 4, 2, 3, and 6 | 2 | 3+3 | |
| 2 | 2 | 2, 3, 6, 0, 1, 4, and 5 | 2 | 3+4 | |
| 3 | 2 | 2, 3, 6, 7, 0, 1, 4, and 5 or 0, 1, 4, 5, 2, 3, 6, and 7 | 2 | 4+4 | |
| 4 | 2 | Alt.1: 2, 3, 6, 0, and 1 or 0, 1, 4, 2, and 3 | 2 | 3+2 | Newly added port configuration solution |
| | | Alt.2: 0, 1, 2, 3, and 6 or 2, 3, 0, 1, and 4 | | | |
| 5 | 2 | Alt.1: 2, 0, 1, 4, and 5 or 0, 2, 3, 6, and 7 | 2 | 1+4 | |
| | | Alt.2: 0, 1, 4, 5, and 2 or 2, 3, 6, 7, and 0 | | | |
| 6 | 2 | Alt.1: 2, 3, 6, 7, and 0 or 0, 1, 4, 5, and 2 | 2 | 4+1 | |
| | | Alt.2: 0, 2, 3, 6, and 7 or 2, 0, 1, 4, and 5 | | | |
| 7 | 2 | Alt.1: 2, 3, 0, 1, 4, and 5 or 0, 1, 2, 3, 6, and 7 | 2 | 2+4 | |
| | | Alt.2: 0, 1, 4, 5, 2, and 3 or 2, 3, 6, 7, 0, and 1 | | | |

(continued)

| | Dual codewords (One Codeword): A codeword 0 is enabled (Codeword 0 enabled), and a codeword 1 is enabled (Codeword 1 enabled) | | | | | |
|---|---|---|---|---|---|
| Index value (value) | Quantity of DMRS CDM groups without data | DMRS port (port) | | Quantity of front-load symbols (Number of front-load symbols) | Quantity of transmitted data streams | |
| 8 | 2 | Alt.1: 2, 3, 6, 7, 0, and 1 or 0, 1, 4, 5, 2, and 3 | Alt.2: 0, 1, 2, 3, 6, and 7 or 2, 3, 0, 1, 4, and 5 | 2 | 4+2 | |
| 9 | 2 | Alt.1: 2, 3, 6, 7, 0, 1, and 4 or 0, 1, 4, 5, 2, 3, and 6 | Alt.2: 0, 1, 4, 2, 3, 6, and 7 or 2, 3, 6, 0, 1, 4, and 5 | 2 | 4+3 | |

When the network device is configured for using the two codewords for sending, as shown in a port configuration in Table 7, Table 7 indicates that the DMRS type (dmrs-Type) is 1, the maximum length (maxLength) is 2, and the terminal device supports the maximum of eight PDSCH DMRS ports (that is, ports 0 to 7 shown in a 3rd column), where the parameter: dmrs-Type indicates a DMRS configuration type, and the parameter: maxLength indicates a maximum quantity of symbols of a front-loaded (front-loaded) DMRS. The value of the DMRS port is the abbreviation. To be specific, "0" indicates 1000 and "1" indicates 1001. In a 2nd column in Table 7, content "quantity of DMRS CDM groups without data (Number of DMRS CDM group(s) without data)" indicates that resources corresponding to DMRS ports in the quantity of CDM groups do not carry a PDSCH and the DMRS of the terminal device. Values 1, 2, and 3 of the "quantity of DMRS CDM groups without data" correspond to CDM groups {0}, {0, 1}, and {0, 1, 2} respectively. For example, when the index value is 0, a value of the "quantity of DMRS CDM groups without data" is 2, and the terminal device determines to use the CDM group {0} and the CDM group {1} to receive information. It can be learned from Table 1 that ports corresponding to the CDM group {0} are 1000, 1001, 1004, and 1005, and ports corresponding to the CDM group {1} are 1002, 1003, 1006, and 1007. Based on content in the 3rd column in Table 7, the terminal device determines that the DMRS and the PDSCH that are sent by the network device to the terminal device are currently carried on time-frequency resources corresponding to the port 1002, the port 1003, the port 1000, the port 1001, and the port 1004. Based on content in a 5th column in Table 7, a quantity 2+3 of transmitted data streams indicates that a quantity of transmitted data streams corresponding to the first antenna set is 2, and a quantity of transmitted data streams corresponding to the second antenna set is 3. Correspondingly, the terminal device may divide the used DMRS ports into two groups. A quantity of the first group of DMRS ports is 2, and a quantity of the second group of DMRS ports is 3. Correspondingly, the terminal device determines that the first group of DMRS ports are the port 1002 and the port 1003, and the second group of DMRS ports are the port 1000, the port 1001, and the port 1004. The first group of DMRS ports correspond to the first antenna set, and the second group of DMRS ports correspond to the second antenna set.

For another example, as shown in Table 7, when the index value is 4, that the quantity of transmitted data streams is 3+2 indicates that a quantity of transmitted data streams corresponding to the first antenna set is 3, and a quantity of transmitted data streams corresponding to the second antenna set is 2. The terminal device may divide the used DMRS ports, for example, Alt.1: 2, 3, 6, 0, and 1, into two groups. In other words, the terminal device may divide the used DMRS ports: the DMRS port 2, the DMRS port 3, the DMRS port 6, the DMRS port 0, and the DMRS port 1 into two groups. A value of the DMRS port is an abbreviation. For example, the DMRS port 2 represents a DMRS port 1002, and the DMRS port 3 represents a DMRS port 1003. The terminal device determines that the first group of DMRS ports include {DMRS port 2, DMRS port 3, DMRS port 6}, and the second group of DMRS ports include {DMRS port 0, DMRS port 1}. Alternatively, the terminal device may divide the used DMRS ports, for example, Alt.1: 0, 1, 4, 2, and 3, into two groups. In other words, the terminal device may divide the used DMRS ports: the DMRS port 0, the DMRS port 1, the DMRS port 4, the DMRS port 2, and the DMRS port 3 into two groups. A value of the DMRS port is an abbreviation. For example, the DMRS port 0 represents a DMRS port 1000, and the DMRS port 1 represents a DMRS port 1001. The terminal device determines that the first group of DMRS ports include {DMRS port 0, DMRS port 1, DMRS port 4}, and the second group of DMRS ports include {DMRS port 2, DMRS port 3}.

The following further provides examples of two DMRS port configurations. For example, Table 8 indicates that a DMRS type (dmrs-Type) is 2, a maximum length (maxLength) is 1, and the terminal device supports a maximum of six PDSCH DMRS ports (that is, ports 0 to 5 shown in a 3rd column). A value of the DMRS port is an abbreviation. To be specific, "0" indicates 1000 and "1" indicates 1001. Meanings of parameters in Table 8 are the same as meanings of the corresponding parameters in Table 7.

Table 8

| Dual codewords (One Codeword): A codeword 0 is enabled (Codeword 0 enabled), and a codeword 1 is enabled (Codeword 1 enabled) | | | | |
|---|---|---|---|---|
| Index value (value) | Quantity of DMRS CDM groups without data | DMRS port (port) | Quantity of transmitted data streams | |
| 0 | 3 | 0 to 4 | 2+3 | |
| 1 | 3 | 0 to 5 | 2+4 | |
| 2 | 3 | Alt.2: 0 to 4 | 3+2 | Newly added port configuration solution |
| 3 | 3 | Alt.2: 0 to 5 | 4+2 | |

Table 9 indicates that a DMRS type (dmrs-Type) is 2, a maximum length (maxLength) is 2, and the terminal device supports a maximum of eight PDSCH DMRS ports (that is, ports shown in a 3rd column). A value of the DMRS port is an abbreviation. To be specific, "0" indicates 1000 and "1" indicates 1001. Meanings of parameters in Table 9 are the same as meanings of the corresponding parameters in Table 7 and Table 8.

Table 9

| Dual codewords (One Codeword): A codeword 0 is enabled (Codeword 0 enabled), and a codeword 1 is enabled (Codeword 1 enabled) | | | | | |
|---|---|---|---|---|---|
| Index value (value) | Quantity of DMRS CDM groups without data | DMRS port (port) | Quantity of front-load symbols (Number of front-load symbols) | Quantity of transmitted data streams | |
| 0 | 3 | 0 to 4 | 1 | | |
| 1 | 3 | 0 to 5 | 1 | | |
| 2 | 2 | 2, 3, 0, 1, and 6 | 2 | 2+3 | |
| 3 | 2 | 2, 3, 8, 0, 1, and 6 or 0, 1, 6, 2, 3, and 8 | 2 | 3+3 | Adjustment of a port sequence in an existing port configuration solution |
| 4 | 2 | 2, 3, 8, 0, 1, 6, and 7 | 2 | 3+4 | |
| 5 | 2 | 2, 3, 8, 9, 0, 1, 6, and 7 or 0, 1, 6, 7, 2, 3, 8, and 9 | 2 | 4+4 | |

27

(continued)

| Dual codewords (One Codeword):<br>A codeword 0 is enabled (Codeword 0 enabled), and a codeword 1 is enabled (Codeword 1 enabled) | | | | | |
|---|---|---|---|---|---|
| Index value (value) | Quantity of DMRS CDM groups without data | DMRS port (port) | Quantity of front-load symbols (Number of front-load symbols) | Quantity of transmitted data streams | |
| 6 | 2 | Alt.1: 2, 3, 8, 0, and 1<br>or<br>0, 1, 6, 2, and 3 | 2 | 3+2 | Newly added port configuration solution |
| | | Alt.2: 0, 1, 2, 3, and 8<br>or<br>2, 3, 0, 1, and 6 | | | |
| 7 | 2 | Alt.1: 2, 0, 1, 6, and 7<br>or<br>0, 2, 3, 8, and 9 | 2 | 1+4 | |
| | | Alt.2: 0, 1, 6, 7, and 2<br>or<br>2, 3, 8, 9, and 0 | | | |
| 8 | 2 | Alt.1: 2, 3, 8, 9, and 0<br>or<br>0, 1, 6, 7, and 2 | 2 | 4+1 | |
| | | Alt.2: 0, 2, 3, 8, and 9<br>or<br>2, 0, 1, 6, and 7 | | | |
| 9 | 2 | Alt.1: 2, 3, 0, 1, 6, and 7<br>or<br>0, 1, 2, 3, 8, and 9 | 2 | 2+4 | |
| | | Alt.2: 0, 1, 6, 7, 2, and 3<br>or<br>2, 3, 8, 9, 0, and 1 | | | |
| 10 | 2 | Alt.1: 2, 3, 8, 9, 0, and 1<br>or<br>0, 1, 6, 7, 2, and 3 | 2 | 4+2 | |
| | | Alt.2: 0, 1, 2, 3, 8, and 9<br>or<br>2, 3, 0, 1, 6, and 7 | | | |
| 11 | 2 | Alt.1: 2, 3, 8, 9, 0, 1, and 6<br>or<br>0, 1, 6, 7, 2, 3, and 8 | 2 | 4+3 | |
| | | Alt.2: 0, 1, 6, 2, 3, 8, and 9<br>or<br>2, 3, 8, 0, 1, 6, and 7 | | | |

In a possible implementation, the terminal device receives first indication information from the network device, where the first indication information indicates that the first antenna set corresponds to the first CDM group and/or the second antenna set corresponds to the second CDM group. It may alternatively be understood as that the first indication information indicates a DMRS port corresponding to the first antenna set and/or a DMRS port corresponding to the second antenna set.

In an example, as shown in Table 7, when the network device is configured for using two codewords for sending, a DMRS type (dmrs-Type) is 1, a maximum length (maxLength) is 2, and the terminal device supports a maximum of eight PDSCH DMRS ports. When the index value is 4, that the quantity of transmitted data streams is 3+2 indicates that a quantity of transmitted data streams corresponding to the first antenna set is 3, and a quantity of transmitted data streams corresponding to the second antenna set is 2. Correspondingly, the terminal device may divide the used DMRS ports into two groups. A quantity of the first group of DMRS ports is 3, and a quantity of the second group of DMRS ports is 2. That is, the DMRS ports, for example, Alt.2: 0, 1, 2, 3, and 6, used by the terminal device are divided into two groups. In other words, the DMRS ports used by the terminal device include the DMRS port 0, the DMRS port 1, the DMRS port 2, the DMRS port 3, and the DMRS port 6 and are divided into two groups. The terminal device receives the first indication information from the network device, where the first indication information indicates that the first antenna set corresponds to the first CDM group and the second antenna set corresponds to the second CDM group. The first CDM group includes one CDM group, the CDM group is a CDM group 1, and the CDM group 1 includes the DMRS port 2, the DMRS port 3, the DMRS port 6, and a DMRS port 7. The second CDM group includes one CDM group, the CDM group is a CDM group 0, and the CDM group 0 includes the DMRS port 0, the DMRS port 1, a DMRS port 4, and a DMRS port 5. Correspondingly, the terminal device may divide, based on the first indication information, the DMRS ports used by the terminal device into two groups, where the used DMRS ports include the DMRS port 0, the DMRS port 1, the DMRS port 2, the DMRS port 3, and the DMRS port 6. That is, the first group of DMRS ports include {port 2, DMRS port 3, DMRS port 6}, and the second group of DMRS ports include {DMRS port 0, DMRS port 1}. Alternatively, the DMRS ports, for example, Alt.2: 2, 3, 0, 1, and 4, used by the terminal device are divided into two groups. In other words, the DMRS ports used by the terminal device include the DMRS port 2, the DMRS port 3, the DMRS port 0, the DMRS port 1, and the DMRS port 4 and are divided into two groups. The terminal device receives the first indication information from the network device, where the first indication information indicates that the first antenna set corresponds to the first CDM group and the second antenna set corresponds to the second CDM group. The first CDM group includes one CDM group, the CDM group is a CDM group 0, and the CDM group 0 includes the DMRS port 0, the DMRS port 1, the DMRS port 4, and a DMRS port 5. The second CDM group includes one CDM group, the CDM group is a CDM group 1, and the CDM group 1 includes the DMRS port 2, the DMRS port 3, a DMRS port 6, and a DMRS port 7. Correspondingly, the terminal device may divide, based on the first indication information, the DMRS ports used by the terminal device into two groups, where the used DMRS ports include the DMRS port 2, the DMRS port 3, the DMRS port 0, the DMRS port 1, and the DMRS port 4. That is, the first group of DMRS ports include {port 0, DMRS port 1, DMRS port 4}, and the second group of DMRS ports include {DMRS port 2, DMRS port 3}.

In a manner in which the terminal device receives the first indication information from the network device, the terminal device can determine, based on the first indication information, that the first antenna set corresponds to the first CDM group and/or the second antenna set corresponds to the second CDM group, so that the terminal device quickly divides the used DMRS ports into two groups: the first group of DMRS ports and the second group of DMRS ports based on the first indication information.

In another possible implementation, that the terminal device determines the first group of DMRS ports and the second group of DMRS ports includes: The terminal device determines the first group of DMRS ports and the second group of DMRS ports when determining that the quantity of transmitted data streams meets a first condition. The first condition may be greater than a first threshold, and the first threshold may be 4. Configurations of the first group of DMRS ports and the second group of DMRS ports are related to the quantity of transmitted data streams, and the quantity of transmitted data streams includes the quantity of transmitted data streams corresponding to the first antenna set and the quantity of transmitted data streams corresponding to the second antenna set. In other words, it may be understood as that the configurations of the first group of DMRS ports and the second group of DMRS ports are related to the quantity of transmitted data streams corresponding to the first antenna set and the quantity of transmitted data streams corresponding to the second antenna set. In other words, the configurations of the first group of DMRS ports and the second group of DMRS ports support various combinations of quantities of transmitted data streams. The various combinations of quantities of transmitted streams include the quantity of transmitted data streams corresponding to the first antenna set and the quantity of transmitted data streams corresponding to the second antenna set. That the terminal device determines that the quantity of transmitted data streams meets the first condition may be understood as that the terminal device determines that a sum of the quantity of transmitted data streams corresponding to the first antenna set and the quantity of transmitted data streams corresponding to the second antenna set meets the first condition, for example, is greater than the first threshold, where the first threshold is 4.

In an example, as shown in Table 7, based on the content in the 5th column in Table 7, the quantity 2+3 of transmitted data streams indicates that the quantity of transmitted data streams corresponding to the first antenna set is 2, and the quantity of transmitted data streams corresponding to the second antenna set is 3. The quantity 3+3 of transmitted data streams indicates that the quantity of transmitted data streams corresponding to the first antenna set is 3, and the quantity of transmitted data streams corresponding to the second antenna set is 3. 2+3=5 is greater than 4, and 3+3=6 is greater than 4.

Step S702: The network device sends received signals to the terminal device based on the first antenna set and the second antenna set.

Step S703: The terminal device receives the received signals from the network device based on the first antenna set and the second antenna set.

The received signals include a first received signal corresponding to the first antenna set and a second received signal corresponding to the second antenna set. That the terminal device receives the received signals from the network device based on the first antenna set and the second antenna set may be understood as that the terminal device receives the first received signal from the network device based on the antenna in the first antenna set, and receives the second received signal from the network device based on the antenna in the second antenna set.

In an example, the terminal device has eight antennas: a 1st antenna to an 8th antenna. The first antenna set may include the 1st antenna to a 4th antenna, and the second antenna set may include a 5th antenna to the 8th antenna. In this case, the terminal device may receive the first received signal based on the 1st antenna to the 4th antenna included in the first antenna set, and receive the second received signal based on the 5th antenna to the 8th antenna included in the second antenna set.

In the method described in FIG. 7, the terminal device determines the first group of DMRS ports and the second group of DMRS ports, and receives the received signals from the network device based on the first antenna set and the second antenna set. To be specific, the terminal device receives the first received signal from the network device based on the first antenna set, and receives the second received signal from the network device based on the second antenna set. In this manner, the signals can be respectively received and processed. This implementation is simple, and computing complexity is low. In comparison with a conventional implementation in which the terminal device corresponds to M antenna identifiers, a third antenna set corresponds to the M antenna identifiers, and the terminal device receives a signal from the network device based on the third antenna set, in this application, the computing complexity is low, and a transmission requirement can be ensured.

FIG. 8 shows a communication method according to an embodiment of this application. The method includes but is not limited to the following steps.

Step S801: A terminal device determines one CSI set or at least one CSI set.

The one CSI set or each of the at least one CSI set includes first CSI and second CSI. The terminal device corresponds to M antenna identifiers, a first antenna set corresponds to a part of the M antenna identifiers, and a second antenna set corresponds to the other part of the M antenna identifiers. For details, refer to related descriptions in step S701. The first CSI is CSI corresponding to the first antenna set, and the second CSI is CSI corresponding to the second antenna set. The first CSI may include one or more of the following: an RI, a CQI, or a PMI. The second CSI may include one or more of the following: an RI, a CQI, or a PMI.

In an example, the terminal device determines one CSI set, where the CSI set includes first CSI and second CSI, the first CSI is CSI corresponding to the first antenna set, and the second CSI is CSI corresponding to the second antenna set. In another example, the terminal device determines at least one CSI set, where each of the at least one CSI set includes first CSI and second CSI. For example, the terminal device determines three CSI sets: a CSI set 1, a CSI set 2, and a CSI set 3. The CSI set 1 includes CSI 1 and CSI 2. The CSI set 2 includes CSI 3 and CSI 4. The CSI set 3 includes CSI 5 and CSI 6. The CSI 1, the CSI 3, and the CSI 5 are first CSI, that is, CSI corresponding to the first antenna set. The CSI 2, the CSI 4, and the CSI 6 are second CSI, that is, CSI corresponding to the second antenna set.

The antenna identifier includes an SRS antenna port number and/or an antenna number. For details, refer to related descriptions in step S701.

Step S802: The terminal device sends the one CSI set or the at least one CSI set to a network device.

That the terminal device sends the one CSI set or the at least one CSI set to the network device may include two cases:

In a first case, the terminal device sends the one CSI set to the network device based on the first antenna set and the second antenna set, where the CSI set includes the first CSI and the second CSI. To be specific, the terminal device sends the first CSI to the network device based on the first antenna set, and sends the second CSI to the network device based on the second antenna set. Optionally, the network device may configure two reporting settings (reporting settings) for the terminal device, and the two reporting settings are respectively associated with the first CSI and the second CSI; or the network device may configure one reporting setting (reporting setting) for the terminal device, and the reporting setting is associated with the first CSI and the second CSI. This is not limited in this embodiment of this application.

Optionally, the terminal device may receive first indication information from the network device, and the terminal device sends the one CSI set to the network device. The first indication information indicates that interference of the first received signal corresponding to the first antenna set to the second received signal corresponding to the second antenna set is less than a first threshold, or indicates that interference of the second received signal corresponding to the second antenna set to the first received signal corresponding to the first antenna set is less than a first threshold. Optionally, the first threshold may be 0. That the interference of the first received signal corresponding to the first antenna set to the second received signal corresponding to the second antenna set is less than the first threshold may be understood as that the network device performs zero-forcing precoding on a codeword corresponding to the first antenna set, and correspondingly, the terminal device performs successive interference cancellation (successive interference cancellation, SIC) on the first received signal. That the interference of the second received signal corresponding to the second antenna set to the first received signal corresponding to the first antenna set is less than the first threshold may be understood as that the network device performs zero-forcing precoding on a codeword corresponding to the second antenna set, and correspondingly, the terminal device performs SIC on the second received signal.

Optionally, after the terminal device determines that the interference of the first received signal corresponding to the first antenna set to the second received signal corresponding to the second antenna set is less than the first threshold, or determines that the interference of the second received signal corresponding to the second antenna set to the first received signal corresponding to the first antenna set is less than the first threshold, the terminal device may send second indication information to the network device, where the second indication information indicates that the terminal device determines that the interference of the first received signal corresponding to the first antenna set to the second received signal corresponding to the second antenna set is less than the first threshold, or determines that the interference of the second received signal corresponding to the second antenna set to the first received signal corresponding to the first antenna set is less than the first threshold. Then, the terminal device sends the one CSI set to the network device. To be specific, it may be understood as that after the terminal device determines to perform SIC on the first received signal or perform SIC on the second received signal, optionally, the terminal device may send the second indication information to the network device, where the second indication information indicates that the terminal device determines to perform SIC on the first received signal or perform SIC on the second received signal. Then, the terminal device sends the one CSI set to the network device.

In a second case, the terminal device sends the at least one CSI set to the network device based on the first antenna set and the second antenna set, where each of the at least one CSI set includes the first CSI and the second CSI. To be specific, the terminal device sends the first CSI included in each of the at least one CSI set to the network device based on the first antenna set, and sends the second CSI included in each of the at least one CSI set to the network device based on the second antenna set.

In a possible implementation, the terminal device may send the at least one CSI set to the network device according to a preset rule.

The preset rule includes at least one mode. The at least one mode may be a processing mode of the terminal device. Optionally, the at least one mode may be one or more of the following: The terminal device performs SIC on the first received signal, the terminal device performs SIC on the second received signal, or the terminal device neither performs SIC on the first received signal nor performs SIC on the second received signal. The first received signal is a received signal corresponding to the first antenna set, and the second received signal is a received signal corresponding to the second antenna set. Alternatively, it may be understood as that the at least one mode may be one or more of the following: A virtual UE 1 performs single-sided SIC receiving, a virtual UE 2 performs single-sided SIC receiving, or neither the virtual UE 1 nor the virtual UE 2 performs SIC receiving.

When the preset rule includes one of the at least one mode, the terminal device sends one of the at least one CSI set to the network device based on the one of the at least one mode. To be specific, a quantity of modes included in the preset rule is the same as a quantity of CSI sets sent by the network device. Correspondingly, one mode corresponds to one CSI set, and the CSI set includes first CSI and second CSI. In an example, the preset rule includes three modes, and the three modes are: The terminal device performs SIC on the first received signal, the terminal device performs SIC on the second received signal, or the terminal device neither performs SIC on the first received signal nor performs SIC on the second received signal. The terminal device sends three CSI sets: the CSI set 1, the CSI set 2, and the CSI set 3 to the network device based on the three modes. The CSI set 1 includes the CSI 1 and the CSI 2. The CSI set 2 includes the CSI 3 and the CSI 4. The CSI set 3 includes the CSI 5 and the CSI 6. That the terminal device performs SIC on the first received signal corresponds to the CSI set 1. That the terminal device performs SIC on the second received signal corresponds to the CSI set 2. That the terminal device neither performs SIC on the first received signal nor performs SIC on the second received signal corresponds to the set 3. The CSI 1, the CSI 3, and the CSI 5 are the first CSI, that is, the CSI corresponding to the first antenna set. The CSI 2, the CSI 4, and the CSI 6 are the second CSI, that is, the CSI corresponding to the second antenna set.

In another possible implementation, first rank indication information in the first CSI is determined based on a channel measurement result corresponding to the first antenna set and a channel measurement result corresponding to the second antenna set, and second rank indication information in the second CSI is determined based on the channel measurement result corresponding to the first antenna set and the channel measurement result corresponding to the second antenna set.

Specifically, the first rank indication information $RI_1$ and the second rank indication information $RI_2$ are determined according to the following formula, which is specifically as follows:

$$(RI_1, RI_2) = \max_{RI_1, RI_2} \left( log_2 \left( 1 + \frac{\|H_1 W_1(:,1:RI_1)\|^2}{\|H_1 W_2(:,1:RI_2)\|^2 + \sigma_1^2} \right) \right.$$

$$\left. + log_2 \left( 1 + \frac{\|H_2 W_2(:,1:RI_2)\|^2}{\|H_2 W_1(:,1:RI_1)\|^2 + \sigma_2^2} \right) \right)$$

$H_1$ represents a channel (measurement result) corresponding to the first antenna set, $H_2$ represents a channel (measurement result) corresponding to the second antenna set, $W_1$ represents precoding corresponding to the first antenna set, $W_2$ represents precoding corresponding to the second antenna set, $\sigma_1^2$ represents noise power corresponding to the first antenna set, and $\sigma_2^2$ represents noise power corresponding to the second antenna set.

In another possible implementation, a manner of determining the CQI in the first CSI and/or the second CSI may be specified in a protocol, or indicated by indication information. In an example, the terminal device receives third indication information from the network device, where the third indication information indicates the manner of determining the CQI in the first CSI and/or the second CSI. Correspondingly, the terminal device determines the CQI in the first CSI and/or the second CSI based on the third indication information. In another example, the terminal device sends fourth indication information to the network device, where the fourth indication information indicates the manner of determining the CQI in the first CSI and/or the second CSI.

Step S803: The network device receives the one CSI set or the at least one CSI set from the terminal device.

In the method described in FIG. 8, a manner in which the terminal device sends the one CSI set or the at least one CSI set to the network device may be understood as a manner in which the terminal device sends the first CSI in the one CSI set or the at least one CSI set to the network device based on the first antenna set, and sends the second CSI in the one CSI set or the at least one CSI set to the network device based on the second antenna set, so that the terminal device feeds back different CSI based on different antenna sets, thereby meeting a transmission requirement.

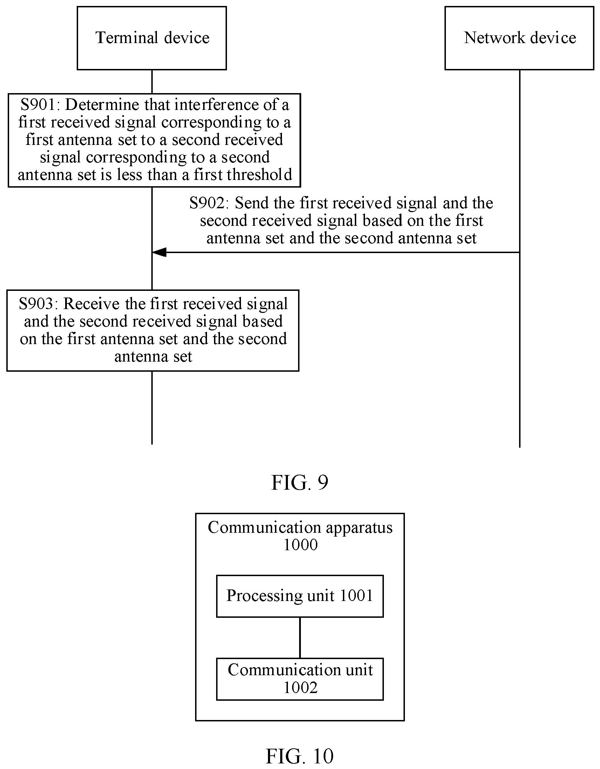

FIG. 9 shows another communication method according to an embodiment of this application. The method includes but is not limited to the following steps.

Step S901: A terminal device determines that interference of a first received signal corresponding to a first antenna set to a second received signal corresponding to a second antenna set is less than a first threshold.

The first threshold may be 0, the terminal device corresponds to M antenna identifiers, the first antenna set corresponds to a part of the M antenna identifiers, and the second antenna set corresponds to the other part of the M antenna identifiers. The antenna identifier includes an SRS antenna port number and/or an antenna number. For details, refer to related descriptions in step S701. Details are not described herein again.

That the interference of the first received signal corresponding to the first antenna set to the second received signal corresponding to the second antenna set is less than the first threshold may be understood as that a network device performs zero-forcing precoding on a codeword corresponding to the first antenna set, and correspondingly, the terminal device performs SIC on the first received signal. In other words, the terminal device determines that a virtual UE that performs single-sided SIC is a virtual UE 1.

In a possible implementation, the terminal device receives first indication information from the network device. Optionally, before the terminal device determines that the interference of the first received signal corresponding to the first antenna set to the second received signal corresponding to the second antenna set is less than the first threshold, the terminal device receives the first indication information from the network device.

The first indication information indicates that the interference of the first received signal corresponding to the first antenna set to the second received signal corresponding to the second antenna set is less than the first threshold, or indicates that interference of the second received signal corresponding to the second antenna set to the first received signal corresponding to the first antenna set is less than the first threshold. That the interference of the first received signal corresponding to the first antenna set to the second received signal corresponding to the second antenna set is less than the first threshold may be understood as that the network device performs zero-forcing precoding on the codeword corresponding to the first antenna set, and correspondingly, the terminal device performs SIC on the first received signal. That the interference of the second received signal corresponding to the second antenna set to the first received signal corresponding to the first antenna set is less than the first threshold may be understood as that the network device performs zero-forcing precoding on a codeword corresponding to the second antenna set, and correspondingly, the terminal device performs SIC on the second received signal.

The first indication information indicates that the interference of the first received signal corresponding to the first antenna set to the second received signal corresponding to the second antenna set is less than the first threshold, and the method further includes: The terminal device determines, based on the first indication information, to decode the second received signal. The terminal device receives a DMRS that corresponds to the second antenna set and that is in the second received signal. The terminal device decodes the second received signal based on the DMRS corresponding to the second antenna set. The terminal device receives a DMRS that corresponds to the first antenna set and that is in the first received signal, and processes the first received signal. That the terminal device receives the DMRS that corresponds to the second antenna set and that is in the second received signal may be understood as a process of measuring a channel corresponding to the second received signal. A process in which the terminal device decodes the second received signal based on the DMRS corresponding to the second antenna set may be understood as a process of decoding the second received signal. That the terminal device receives the DMRS that corresponds to the first antenna set and that is in the first received signal may be understood as a process of measuring a channel corresponding to the first received signal. Processing the first received signal may include performing SIC on the first received signal, and decoding the first received signal. Decoding the first received signal may mean that the terminal device decodes the first received signal based on the DMRS corresponding to the first antenna set.

The first indication information indicates that the interference of the second received signal corresponding to the second antenna set to the first received signal corresponding to the first antenna set is less than the first threshold, and the method further includes: The terminal device determines, based on the first indication information, to decode the first received signal. The terminal device receives a DMRS that corresponds to the first antenna set and that is in the first received signal. The terminal device decodes the first received signal based on the DMRS corresponding to the first antenna set. The terminal device receives a DMRS that corresponds to the second antenna set and that is in the second received signal, and processes the second received signal. That the terminal device receives the DMRS that corresponds to the first antenna set and that is in the first received signal may be understood as a process of measuring a channel corresponding to the first received signal. A process in which the terminal device decodes the first received signal based on the DMRS corresponding to the first antenna set may be understood as a process of decoding the first received signal. That the terminal device receives the DMRS that corresponds to the second antenna set and that is in the second received signal may be understood as a process of measuring a channel corresponding to the second received signal. Processing the second received signal may mean performing SIC on the second received signal, and decoding the second received signal. Decoding the second received signal may mean that the terminal device decodes the second received signal based on the DMRS corresponding to the second antenna set.

In the foregoing descriptions, the network device sends the first indication information to the terminal device, and correspondingly, the terminal device determines, based on the first indication information, that the interference of the first received signal corresponding to the first antenna set to the second received signal corresponding to the second antenna set is less than the first threshold. In the following descriptions, the terminal device may determine to perform SIC on the first received signal or perform SIC on the second received signal, and send second indication information to the network device. Details are as follows:

The terminal device sends the second indication information to the network device. Optionally, after the terminal device determines that the interference of the first received signal corresponding to the first antenna set to the second received signal corresponding to the second antenna set is less than the first threshold, the terminal device sends the second indication information to the network device.

The second indication information indicates that the network device determines that the interference of the first received signal corresponding to the first antenna set to the second received signal corresponding to the second antenna set is less than the first threshold, or the interference of the second received signal corresponding to the second antenna set to the first received signal corresponding to the first antenna set is less than the first threshold. Alternatively, it may be understood as that after determining to perform SIC on the first received signal or perform SIC on the second received signal, the terminal device sends the second indication information to the network device. Correspondingly, after receiving the second indication information, the network device determines to perform zero-forcing precoding on the codeword corresponding to the first antenna set or perform zero-forcing precoding on the codeword corresponding to the second antenna set. That the terminal device determines to perform SIC on the first received signal or perform SIC on the second received signal may alternatively be understood as that the terminal device determines that the virtual UE 1 performs single-sided SIC receiving or a virtual UE 2 performs single-sided SIC receiving.

In another possible implementation, that the interference of the first received signal corresponding to the first antenna set to the second received signal corresponding to the second antenna set is less than the first threshold, or the interference of the second received signal corresponding to the second antenna set to the first received signal corresponding to the first antenna set is less than the first threshold is agreed on in a protocol. To be specific, that the network device performs zero-forcing precoding on the codeword corresponding to the first antenna set or performs zero-forcing precoding on the codeword corresponding to the second antenna set is specified in the protocol. Correspondingly, that the terminal device determines to perform SIC on the first received signal or perform SIC on the second received signal is specified in the protocol. In other words, the terminal device divides used DMRS ports into two groups: a first group of DMRS ports and a second group of DMRS ports. The first group of DMRS ports correspond to the first antenna set, and the second group of DMRS ports correspond to the second antenna set. That the interference of the first received signal corresponding to the first group of DMRS ports to the second received signal corresponding to the second group of DMRS ports is less than the first threshold, or the interference of the second received signal corresponding to the second group of DMRS ports to the first received signal corresponding to the first group of DMRS ports is less than the first threshold is agreed on in the protocol.

In another possible implementation, if the interference of the first received signal corresponding to the first antenna set to the second received signal corresponding to the second antenna set is less than the first threshold, a modulation order of the codeword corresponding to the first antenna set is lower than a modulation order of the codeword corresponding to the second antenna set. In other words, the network device performs zero-forcing precoding on a codeword with a low modulation order, and correspondingly, the terminal device performs SIC receiving on the codeword with the low modulation order. For example, the network device performs zero-forcing precoding on the codeword corresponding to the first antenna set, and the terminal device performs SIC receiving on the first received signal. Correspondingly, the modulation order of the codeword corresponding to the first antenna set is lower than the modulation order of the codeword corresponding to the second antenna set. In other words, the network device performs zero-forcing precoding on the codeword corresponding to the second antenna set, and the terminal device performs SIC receiving on the second received signal. Correspondingly, the modulation order of the codeword corresponding to the second antenna set is lower than the modulation order of the codeword corresponding to the first antenna set. Optionally, the codeword with the low modulation order may be determined by the network device based on one CSI set or at least one CSI set sent by the terminal device, or may be determined by the network device based on actual scheduling information.

Step S902: The network device sends the first received signal and the second received signal to the terminal device based on the first antenna set and the second antenna set.

Step S903: The terminal device receives the first received signal and the second received signal from the network device based on the first antenna set and the second antenna set.

That the terminal device receives the first received signal and the second received signal from the network device based on the first antenna set and the second antenna set may mean that the terminal device receives the first received signal from the network device based on the first antenna set, and receives the second received signal from the network device based on the second antenna set.

In the method described in FIG. 9, the terminal device determines that the interference of the first received signal corresponding to the first antenna set to the second received signal corresponding to the second antenna set is less than the first threshold, that is, the terminal device determines that the network device performs zero-forcing precoding on the codeword corresponding to the first antenna set. The terminal device receives the first received signal and the second received signal from the network device based on the first antenna set and the second antenna set. Correspondingly, the terminal device performs successive interference cancellation SIC on the first received signal. In this manner, computing complexity is low, and a transmission requirement is met.

It should be noted that the embodiments in FIG. 7, FIG. 8, and FIG. 9 may be used as separate embodiments, or may be combined with each other. For example, the embodiment in FIG. 7 is combined with the embodiment in FIG. 9. This is not limited in embodiments of this application.

The foregoing describes the methods in embodiments of this application in detail. The following provides apparatuses in embodiments of this application.

FIG. 10 is a diagram of a structure of a communication apparatus 1000 according to an embodiment of this application. The communication apparatus 1000 may be a terminal device or a chip in the terminal device. The communication apparatus 1000 may include a processing unit 1001 and a communication unit 1002. Detailed descriptions of units are as follows:

The processing unit 1001 is configured to determine a first group of demodulation reference signal DMRS ports and a second group of DMRS ports, where the first group of DMRS ports correspond to a first antenna set, the second group of DMRS ports correspond to a second antenna set, the apparatus corresponds to M antenna identifiers, the first antenna set corresponds to a part of the M antenna identifiers, and the second antenna set corresponds to the other part of the M antenna identifiers. The communication unit 1002 is configured to receive received signals from a network device based on the first antenna set and the second antenna set, where the received signals include a first received signal corresponding to the first antenna set and a second received signal corresponding to the second antenna set.

In a possible implementation, the antenna identifier includes a sounding reference signal SRS antenna port number and/or an antenna number.

In another possible implementation, the first group of DMRS ports belong to a first code division multiplexing CDM group, the second group of DMRS ports belong to a second CDM group, the first CDM group includes at least one CDM group, and the second CDM group includes at least one CDM group.

In another possible implementation, the first CDM group is different from the second CDM group.

In another possible implementation, the communication unit 1002 is further configured to receive first indication information from the network device, where the first indication information indicates that the first antenna set corresponds to the first CDM group and/or the second antenna set corresponds to the second CDM group.

In another possible implementation, the processing unit 1001 is configured to determine the first group of DMRS ports and the second group of DMRS ports when determining that a quantity of transmitted data streams meets a first condition.

In another possible implementation, configurations of the first group of DMRS ports and the second group of DMRS ports are related to the quantity of transmitted data streams, and the quantity of transmitted data streams includes a quantity of transmitted data streams corresponding to the first antenna set and a quantity of transmitted data streams corresponding to the second antenna set.

In another possible implementation, M is equal to 8.

It should be noted that, for implementations and beneficial effects of the units, refer to corresponding descriptions in the method embodiment shown in FIG. 7.

Optionally, the communication apparatus 1000 may be a network device or a chip in the network device. Detailed descriptions of units in the communication apparatus 1000 may alternatively be as follows: The processing unit 1001 is configured to determine a first group of demodulation reference signal DMRS ports and a second group of DMRS ports, where the first group of DMRS ports correspond to a first antenna set, the second group of DMRS ports correspond to a second antenna set, a terminal device corresponds to M antenna identifiers, the first antenna set corresponds to a part of the M antenna identifiers, and the second antenna set corresponds to the other part of the M antenna identifiers. The communication unit 1002 is configured to send received signals to the terminal device based on the first antenna set and the second antenna set, where the received signals include a first received signal corresponding to the first antenna set and a second received signal corresponding to the second antenna set.

In a possible implementation, the antenna identifier includes a sounding reference signal SRS antenna port number and/or an antenna number.

In another possible implementation, the first group of DMRS ports belong to a first code division multiplexing CDM group, the second group of DMRS ports belong to a second CDM group, the first CDM group includes at least one CDM group, and the second CDM group includes at least one CDM group.

In another possible implementation, the first CDM group is different from the second CDM group.

In another possible implementation, the communication unit 1002 is further configured to send first indication information to the terminal device, where the first indication information indicates that the first antenna set corresponds to the first CDM group and/or the second antenna set corresponds to the second CDM group.

In another possible implementation, configurations of the first group of DMRS ports and the second group of DMRS ports are related to a quantity of transmitted data streams, and the quantity of transmitted data streams includes a quantity of transmitted data streams corresponding to the first antenna set and a quantity of transmitted data streams corresponding to the second antenna set.

In another possible implementation, M is equal to 8.

It should be noted that, for implementations and beneficial effects of the units, refer to corresponding descriptions in the method embodiment shown in FIG. 7.

Optionally, the communication apparatus 1000 may be a terminal device or a chip in the terminal device. Detailed descriptions of units in the communication apparatus 1000 may alternatively be as follows: The processing unit 1001 is configured to determine one channel state information CSI set or at least one CSI set, where the one CSI set or each of the at least one CSI set includes first CSI and second CSI, the apparatus corresponds to M antenna identifiers, a first antenna set corresponds to a part of the M antenna identifiers, a second antenna set corresponds to the other part of the M antenna identifiers, the first CSI is CSI corresponding to the first antenna set, and the second CSI is CSI corresponding to the second antenna set. The communication unit 1002 is configured to send the one CSI set or the at least one CSI set to a network device.

In a possible implementation, the antenna identifier includes a sounding reference signal SRS antenna port number and/or an antenna number.

In another possible implementation, the communication unit 1002 is configured to send the at least one CSI set to the network device according to a preset rule.

In another possible implementation, the preset rule includes at least one mode.

In another possible implementation, the communication unit 1002 is configured to: when the preset rule includes one of the at least one mode, send one of the at least one CSI set to the network device based on the mode.

In another possible implementation, first rank indication information in the first CSI is determined based on a channel measurement result corresponding to the first antenna set and a channel measurement result corresponding to the second antenna set, and second rank indication information in the second CSI is determined based on the channel measurement result corresponding to the first antenna set and the channel measurement result corresponding to the second antenna set.

In another possible implementation, a manner of determining a CQI in the first CSI and/or the second CSI is specified in a protocol.

In another possible implementation, the communication unit 1002 is further configured to receive third indication information from the network device, where the third indication information indicates a manner of determining a CQI in the first CSI and/or the second CSI.

In another possible implementation, the communication unit 1002 is further configured to send fourth indication information to the network device, where the fourth indication information indicates a manner of determining a CQI in the first CSI and/or the second CSI.

It should be noted that, for implementations and beneficial effects of the units, refer to corresponding descriptions in the method embodiment shown in FIG. 8.

Optionally, the communication apparatus 1000 may be a network device or a chip in the network device. Detailed descriptions of units in the communication apparatus 1000 may alternatively be as follows: The communication unit 1002 is configured to receive one CSI set or at least one CSI set from a terminal device, where the one CSI set or each of the at least one CSI set includes first CSI and second CSI, the terminal device corresponds to M antenna identifiers, a first antenna set corresponds to a part of the M antenna identifiers, a second antenna set corresponds to the other part of the M antenna identifiers, the first CSI is CSI corresponding to the first antenna set, and the second CSI is CSI corresponding to the second antenna set.

In a possible implementation, the antenna identifier includes a sounding reference signal SRS antenna port number and/or an antenna number.

In another possible implementation, first rank indication information in the first CSI is determined based on a channel measurement result corresponding to the first antenna set and a channel measurement result corresponding to the second antenna set, and second rank indication information in the second CSI is determined based on the channel measurement result corresponding to the first antenna set and the channel measurement result corresponding to the second antenna set.

In another possible implementation, a manner of determining a CQI in the first CSI and/or the second CSI is specified in a protocol.

In another possible implementation, the communication unit 1002 is further configured to send third indication information to the terminal device, where the third indication information indicates a manner of determining a CQI in the first CSI and/or the second CSI.

In another possible implementation, the communication unit 1002 is further configured to receive fourth indication information from the terminal device, where the fourth indication information indicates a manner of determining a CQI in the first CSI and/or the second CSI.

It should be noted that, for implementations and beneficial effects of the units, refer to corresponding descriptions in the method embodiment shown in FIG. 8.

Optionally, the communication apparatus 1000 may be a terminal device or a chip in the terminal device. Detailed descriptions of units in the communication apparatus 1000 may alternatively be as follows: The processing unit 1001 is configured to determine that interference of a first received signal corresponding to a first antenna set to a second received signal corresponding to a second antenna set is less than a first threshold, where the apparatus corresponds to M antenna identifiers, the first antenna set corresponds to a part of the M antenna identifiers, and the second antenna set corresponds to the other part of the M antenna identifiers. The communication unit 1002 is configured to receive the first received signal and the second received signal from a network device based on the first antenna set and the second antenna set.

In a possible implementation, the antenna identifier includes a sounding reference signal SRS antenna port number and/or an antenna number.

In another possible implementation, the communication unit 1002 is configured to receive first indication information from the network device, where the first indication information indicates that the interference of the first received signal corresponding to the first antenna set to the second received signal corresponding to the second antenna set is less than the first threshold, or interference of the second received signal corresponding to the second antenna set to the first received signal corresponding to the first antenna set is less than the first threshold.

In another possible implementation, the first indication information indicates that the interference of the first received signal corresponding to the first antenna set to the second received signal corresponding to the second antenna set is less than the first threshold. The processing unit 1001 is configured to determine, based on the first indication information, to decode the second received signal. The communication unit 1002 is configured to receive a DMRS that corresponds to the second antenna set and that is in the second received signal. The processing unit 1001 is configured to decode the second received signal based on the DMRS corresponding to the second antenna set. The communication unit 1002 is configured to: receive a DMRS that corresponds to the first antenna set and that is in the first received signal, and process the first received signal.

In another possible implementation, the communication unit 1002 is configured to send second indication information to the network device, where the second indication information indicates that the network device determines that the interference of the first received signal corresponding to the first antenna set to the second received signal corresponding to the second antenna set is less than the first threshold, or the interference of the second received signal corresponding to the second antenna set to the first received signal corresponding to the first antenna set is less than the first threshold.

In another possible implementation, that the interference of the first received signal corresponding to the first antenna set to the second received signal corresponding to the second antenna set is less than the first threshold, or the interference of the second received signal corresponding to the second antenna set to the first received signal corresponding to the first antenna set is less than the first threshold is agreed on in a protocol.

In another possible implementation, if the interference of the first received signal corresponding to the first antenna set to the second received signal corresponding to the second antenna set is less than the first threshold, a modulation order of a codeword corresponding to the first antenna set is lower than a modulation order of a codeword corresponding to the second antenna set.

It should be noted that, for implementations and beneficial effects of the units, refer to corresponding descriptions in the method embodiment shown in FIG. 9.

Optionally, the communication apparatus 1000 may be a network device or a chip in the network device. Detailed descriptions of units in the communication apparatus 1000 may alternatively be as follows: The processing unit 1001 is configured to determine that interference of a first received signal corresponding to a first antenna set to a second received signal corresponding to a second antenna set is less than a first threshold. The communication unit 1002 is configured to send the first received signal and the second received signal to a terminal device based on the first antenna set and the second antenna set, where the terminal device corresponds to M antenna identifiers, the first antenna set corresponds to a part of the M antenna identifiers, and the second antenna set corresponds to the other part of the M antenna identifiers.

In a possible implementation, the antenna identifier includes a sounding reference signal SRS antenna port number and/or an antenna number.

In another possible implementation, the communication unit 1002 is configured to send first indication information to the terminal device, where the first indication information indicates that the interference of the first received signal corresponding to the first antenna set to the second received signal corresponding to the second antenna set is less than the first threshold, or interference of the second received signal corresponding to the second antenna set to the first received signal corresponding to the first antenna set is less than the first threshold.

In another possible implementation, the communication unit 1002 is configured to receive second indication information from the terminal device, where the second indication information indicates that that the interference of the first received signal corresponding to the first antenna set to the second received signal corresponding to the second antenna set is less than the first threshold, or the interference of the second received signal corresponding to the second antenna set to the first received signal corresponding to the first antenna set is less than the first threshold is determined.

In another possible implementation, that the interference of the first received signal corresponding to the first antenna set to the second received signal corresponding to the second antenna set is less than the first threshold, or the interference of the second received signal corresponding to the second antenna set to the first received signal corresponding to the first antenna set is less than the first threshold is agreed on in a protocol.

In another possible implementation, if the interference of the first received signal corresponding to the first antenna set to the second received signal corresponding to the second antenna set is less than the first threshold, a modulation order of a codeword corresponding to the first antenna set is lower than a modulation order of a codeword corresponding to the second antenna set.

It should be noted that, for implementations and beneficial effects of the units, refer to corresponding descriptions in the method embodiment shown in FIG. 9.

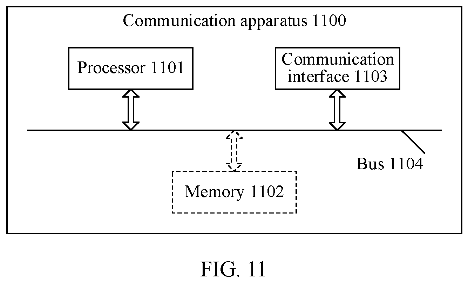

FIG. 11 is a diagram of a structure of a communication apparatus 1100 according to an embodiment of this application. The communication apparatus 1100 may be a terminal device or a chip in the terminal device. The communication apparatus 1100 includes at least one processor 1101 and a communication interface 1103, and optionally, further includes a memory 1102. The processor 1101, the memory 1102, and the communication interface 1103 are connected to each other through a bus 1104. Optionally, the processor 1101 may be integrated with the memory 1102.

The memory 1102 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 1102 is configured for a related computer program and data. The communication interface 1103 is configured to receive and send data.

The processor 1101 may be one or more central processing units (central processing units, CPUs). When the processor 1101 is one CPU, the CPU may be a single-core CPU or a multicore CPU.

The processor 1101 in the communication apparatus 1100 is configured to read computer program code stored in the memory 1102, to perform the following operations:

determining a first group of demodulation reference signal DMRS ports and a second group of DMRS ports, where the first group of DMRS ports correspond to a first antenna set, the second group of DMRS ports correspond to a second antenna set, the apparatus corresponds to M antenna identifiers, the first antenna set corresponds to a part of the M antenna identifiers, and the second antenna set corresponds to the other part of the M antenna identifiers; and receiving received signals from a network device through the communication interface 1103 based on the first antenna set and the second antenna set, where the received signals include a first received signal corresponding to the first antenna set and a second received signal corresponding to the second antenna set.

In a possible implementation, the antenna identifier includes a sounding reference signal SRS antenna port number and/or an antenna number.

In another possible implementation, the first group of DMRS ports belong to a first code division multiplexing CDM group, the second group of DMRS ports belong to a second CDM group, the first CDM group includes at least one CDM group, and the second CDM group includes at least one CDM group.

In another possible implementation, the first CDM group is different from the second CDM group.

In another possible implementation, the processor 1101 is further configured to receive first indication information from the network device through the communication interface 1103, where the first indication information indicates that the first antenna set corresponds to the first CDM group and/or the second antenna set corresponds to the second CDM group.

In another possible implementation, the processor 1101 is further configured to determine the first group of DMRS ports and the second group of DMRS ports when determining that a quantity of transmitted data streams meets a first condition.

In another possible implementation, configurations of the first group of DMRS ports and the second group of DMRS ports are related to the quantity of transmitted data streams, and the quantity of transmitted data streams includes a quantity of transmitted data streams corresponding to the first antenna set and a quantity of transmitted data streams corresponding to the second antenna set.

In another possible implementation, M is equal to 8.

It should be noted that, for implementations and beneficial effects of operations, refer to corresponding descriptions in the method embodiment shown in FIG. 7.

Optionally, the communication apparatus 1100 may be a network device or a chip in the network device. The processor 1101 in the communication apparatus 1100 is configured to read computer program code stored in the memory 1102, to perform the following operations:

determining a first group of demodulation reference signal DMRS ports and a second group of DMRS ports, where the first group of DMRS ports correspond to a first antenna set, the second group of DMRS ports correspond to a second antenna set, a terminal device corresponds to M antenna identifiers, the first antenna set corresponds to a part of the M antenna identifiers, and the second antenna set corresponds to the other part of the M antenna identifiers; and sending received signals to the terminal device through the communication interface 1103 based on the first antenna set and the second antenna set, where the received signals include a first received signal corresponding to the first antenna set and a second received signal corresponding to the second antenna set.

In a possible implementation, the antenna identifier includes a sounding reference signal SRS antenna port number and/or an antenna number.

In another possible implementation, the first group of DMRS ports belong to a first code division multiplexing CDM group, the second group of DMRS ports belong to a second CDM group, the first CDM group includes at least one CDM group, and the second CDM group includes at least one CDM group.

In another possible implementation, the first CDM group is different from the second CDM group.

In another possible implementation, the processor 1101 is further configured to send first indication information to the terminal device through the communication interface 1103, where the first indication information indicates that the first antenna set corresponds to the first CDM group and/or the second antenna set corresponds to the second CDM group.

In another possible implementation, configurations of the first group of DMRS ports and the second group of DMRS ports are related to a quantity of transmitted data streams, and the quantity of transmitted data streams includes a quantity of transmitted data streams corresponding to the first antenna set and a quantity of transmitted data streams corresponding to the second antenna set.

In another possible implementation, M is equal to 8.

It should be noted that, for implementations and beneficial effects of operations, refer to corresponding descriptions in the method embodiment shown in FIG. 7.

Optionally, the communication apparatus 1100 may be a terminal device or a chip in the terminal device. The processor 1101 in the communication apparatus 1100 is configured to read computer program code stored in the memory 1102, to perform the following operations:

determining one channel state information CSI set or at least one CSI set, where the one CSI set or each of the at least one CSI set includes first CSI and second CSI, the apparatus corresponds to M antenna identifiers, a first antenna set corresponds to a part of the M antenna identifiers, a second antenna set corresponds to the other part of the M antenna identifiers, the first CSI is CSI corresponding to the first antenna set, and the second CSI is CSI corresponding to the second antenna set; and sending the one CSI set or the at least one CSI set to a network device through the communication interface 1103.

In a possible implementation, the antenna identifier includes a sounding reference signal SRS antenna port number and/or an antenna number.

In another possible implementation, the processor 1101 is configured to send the at least one CSI set to the network device according to a preset rule through the communication interface 1103.

In another possible implementation, the preset rule includes at least one mode.

In another possible implementation, the processor 1101 is further configured to: when the preset rule includes one of the at least one mode, send one of the at least one CSI set to the network device based on the mode through the communication interface 1103.

In another possible implementation, first rank indication information in the first CSI is determined based on a channel measurement result corresponding to the first antenna set and a channel measurement result corresponding to the second antenna set, and second rank indication information in the second CSI is determined based on the channel measurement result corresponding to the first antenna set and the channel measurement result corresponding to the second antenna set.

In another possible implementation, a manner of determining a CQI in the first CSI and/or the second CSI is specified in a protocol.

In another possible implementation, the processor 1101 is further configured to receive third indication information from the network device through the communication interface 1103, where the third indication information indicates a manner of determining a CQI in the first CSI and/or the second CSI.

In another possible implementation, the processor 1101 is further configured to send fourth indication information to the network device through the communication interface 1103, where the fourth indication information indicates a manner of determining a CQI in the first CSI and/or the second CSI.

It should be noted that, for implementations and beneficial effects of operations, refer to corresponding descriptions in the method embodiment shown in FIG. 8.

Optionally, the communication apparatus 1100 may be a network device or a chip in the network device. The processor 1101 in the communication apparatus 1100 is configured to read computer program code stored in the memory 1102, to perform the following operations:

receiving one CSI set or at least one CSI set from a terminal device through the communication interface 1103, where the one CSI set or each of the at least one CSI set includes first CSI and second CSI, the terminal device corresponds to M antenna identifiers, a first antenna set corresponds to a part of the M antenna identifiers, a second antenna set corresponds to the other part of the M antenna identifiers, the first CSI is CSI corresponding to the first antenna set, and the second CSI is CSI corresponding to the second antenna set.

In a possible implementation, the antenna identifier includes a sounding reference signal SRS antenna port number and/or an antenna number.

In another possible implementation, first rank indication information in the first CSI is determined based on a channel measurement result corresponding to the first antenna set and a channel measurement result corresponding to the second antenna set, and second rank indication information in the second CSI is determined based on the channel measurement result corresponding to the first antenna set and the channel measurement result corresponding to the second antenna set.

In another possible implementation, a manner of determining a CQI in the first CSI and/or the second CSI is specified in a protocol.

In another possible implementation, the processor 1101 is further configured to send third indication information to the terminal device through the communication interface 1103, where the third indication information indicates a manner of determining a CQI in the first CSI and/or the second CSI.

In another possible implementation, the processor 1101 is further configured to receive fourth indication information from the terminal device through the communication interface 1103, where the fourth indication information indicates a manner of determining a CQI in the first CSI and/or the second CSI.

It should be noted that, for implementations and beneficial effects of operations, refer to corresponding descriptions in the method embodiment shown in FIG. 8.

Optionally, the communication apparatus 1100 may be a terminal device or a chip in the terminal device. The processor 1101 in the communication apparatus 1100 is configured to read computer program code stored in the memory 1102, to perform the following operations:

determining that interference of a first received signal corresponding to a first antenna set to a second received signal corresponding to a second antenna set is less than a first threshold, where the apparatus corresponds to M antenna identifiers, the first antenna set corresponds to a part of the M antenna identifiers, and the second antenna set corresponds to the other part of the M antenna identifiers; and receiving the first received signal and the second received signal from a network device through the communication interface 1103 based on the first antenna set and the second antenna set.

In a possible implementation, the antenna identifier includes a sounding reference signal SRS antenna port number and/or an antenna number.

In another possible implementation, the processor 1101 is further configured to receive first indication information from the network device through the communication interface 1103, where the first indication information indicates that the interference of the first received signal corresponding to the first antenna set to the second received signal corresponding to the second antenna set is less than the first threshold, or interference of the second received signal corresponding to the second antenna set to the first received signal corresponding to the first antenna set is less than the first threshold.

In another possible implementation, the first indication information indicates that the interference of the first received signal corresponding to the first antenna set to the second received signal corresponding to the second antenna set is less than the first threshold. The processor 1101 is further configured to: determine, based on the first indication information, to decode the second received signal; receive, through the communication interface 1103, a DMRS that corresponds to the second antenna set and that is in the second received signal; decode the second received signal based on the DMRS corresponding to the second antenna set; and receive, through the communication interface 1103, a DMRS that corresponds to the first antenna set and that is in the first received signal, and process the first received signal.

In another possible implementation, the processor 1101 is further configured to send second indication information to the network device through the communication interface 1103, where the second indication information indicates that the network device determines that the interference of the first received signal corresponding to the first antenna set to the second received signal corresponding to the second antenna set is less than the first threshold, or the interference of the second received signal corresponding to the second antenna set to the first received signal corresponding to the first antenna set is less than the first threshold.

In another possible implementation, that the interference of the first received signal corresponding to the first antenna set to the second received signal corresponding to the second antenna set is less than the first threshold, or the interference of the second received signal corresponding to the second antenna set to the first received signal corresponding to the first antenna set is less than the first threshold is agreed on in a protocol.

In another possible implementation, if the interference of the first received signal corresponding to the first antenna set to the second received signal corresponding to the second antenna set is less than the first threshold, a modulation order of a codeword corresponding to the first antenna set is lower than a modulation order of a codeword corresponding to the second antenna set.

It should be noted that, for implementations and beneficial effects of operations, refer to corresponding descriptions in the method embodiment shown in FIG. 9.

Optionally, the communication apparatus 1100 may be a network device or a chip in the network device. The processor 1101 in the communication apparatus 1100 is configured to read computer program code stored in the memory 1102, to perform the following operations:

determining that interference of a first received signal corresponding to a first antenna set to a second received signal corresponding to a second antenna set is less than a first threshold, and sending the first received signal and the second received signal to a terminal device through the communication interface 1103 based on the first antenna set and the second antenna set, where the terminal device corresponds to M antenna identifiers, the first antenna set corresponds to a part of the M antenna identifiers, and the second antenna set corresponds to the other part of the M antenna identifiers.

In a possible implementation, the antenna identifier includes a sounding reference signal SRS antenna port number and/or an antenna number.

In another possible implementation, the processor 1101 is further configured to send first indication information to the terminal device through the communication interface 1103, where the first indication information indicates that the interference of the first received signal corresponding to the first antenna set to the second received signal corresponding to the second antenna set is less than the first threshold, or interference of the second received signal corresponding to the second antenna set to the first received signal corresponding to the first antenna set is less than the first threshold.

In another possible implementation, the processor 1101 is further configured to receive second indication information from the terminal device through the communication interface 1103, where the second indication information indicates that that the interference of the first received signal corresponding to the first antenna set to the second received signal corresponding to the second antenna set is less than the first threshold, or the interference of the second received signal corresponding to the second antenna set to the first received signal corresponding to the first antenna set is less than the first threshold is determined.

In another possible implementation, that the interference of the first received signal corresponding to the first antenna set to the second received signal corresponding to the second antenna set is less than the first threshold, or the interference of the second received signal corresponding to the second antenna set to the first received signal corresponding to the first antenna set is less than the first threshold is agreed on in a protocol.

In another possible implementation, if the interference of the first received signal corresponding to the first antenna set to the second received signal corresponding to the second antenna set is less than the first threshold, a modulation order of a codeword corresponding to the first antenna set is lower than a modulation order of a codeword corresponding to the second antenna set.

It should be noted that, for implementations and beneficial effects of operations, refer to corresponding descriptions in the method embodiment shown in FIG. 9.

**EP 4 633 050 A1**

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

The method steps in embodiments of this application may be implemented by hardware, or may be implemented by executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in a base station or a terminal. Certainly, the processor and the storage medium may alternatively exist in the base station or the terminal as discrete components.

All or some of the foregoing embodiments may be implemented by using software, hardware, firmware, or any combination thereof. When the software is used to implement embodiments, all or some of embodiments may be implemented in a form of a computer program product. The computer program product includes one or more computer programs or instructions. When the computer programs or instructions are loaded and executed on a computer, all or some of the procedures or functions in embodiments of this application are performed. The computer may be a general-purpose computer, a dedicated computer, a computer network, a network device, a user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or logically conflicted, terms and/or descriptions in different embodiments are consistent and may be mutually referenced, and technical features in different embodiments may be combined based on an internal logical relationship thereof, to form a new embodiment.

In descriptions of this application, terms such as "first", "second", "S701", or "S702" are merely used for distinguished descriptions and for ease of organizing this specification. Different sequence numbers do not have specific technical meanings, and cannot be understood as indicating or implying relative importance, or indicating or implying an execution sequence of operations. Execution sequences of the processes should be determined based on functions and internal logic of the processes.

The term "and/or" in this application describes only an association relationship for associated objects, and indicates that three relationships may exist. For example, "A and/or B" may indicate the following three cases: Only A exists; both A and B exist; or only B exists. A and B may be singular or plural. In addition, the character "/" in this specification indicates an "or" relationship between the associated objects.

In this application, "transmission" may include the following three cases: data sending, data receiving, or data sending and data receiving. In this application, "data" may include service data and/or signaling data.

In this application, the terms "include" or "have" and any variation thereof are intended to cover non-exclusive inclusion. For example, a process/method that includes a series of steps, or a system/product/device that includes a series of units is not necessarily limited to those expressly listed steps or units, but may include other steps or units not explicitly listed or inherent to these processes/methods/products/devices.

In descriptions of this application, unless otherwise specified, a quantity of nouns indicates "a singular noun or a plural noun", that is, "one or more". "At least one" indicates one or more. "At least one of the following: A, B, and C is included" indicates that A may be included, B may be included, C may be included, A and B may be included, A and C may be included, B and C may be included, or A, B, and C may be included. A, B, and C may be singular or plural.

**Claims**

1. A communication method, comprising:

determining, by a terminal device, a first group of demodulation reference signal DMRS ports and a second group of DMRS ports, wherein the first group of DMRS ports correspond to a first antenna set, the second group of DMRS ports correspond to a second antenna set, the terminal device corresponds to M antenna identifiers, the first antenna set corresponds to a part of the M antenna identifiers, and the second antenna set corresponds to the other part of the M antenna identifiers; and

receiving, by the terminal device, received signals from a network device based on the first antenna set and the second antenna set, wherein the received signals comprise a first received signal corresponding to the first antenna set and a second received signal corresponding to the second antenna set.

2. The method according to claim 1, wherein the antenna identifier comprises a sounding reference signal SRS antenna port number and/or an antenna number.

3. The method according to claim 1 or 2, wherein the first group of DMRS ports belong to a first code division multiplexing CDM group, the second group of DMRS ports belong to a second CDM group, the first CDM group comprises at least one CDM group, and the second CDM group comprises at least one CDM group.

4. The method according to claim 3, wherein the first CDM group is different from the second CDM group.

5. The method according to claim 3 or 4, wherein the method further comprises:
receiving, by the terminal device, first indication information from the network device, wherein the first indication information indicates that the first antenna set corresponds to the first CDM group and/or the second antenna set corresponds to the second CDM group.

6. The method according to any one of claims 1 to 5, wherein determining, by the terminal device, the first group of demodulation reference signal DMRS ports and the second group of DMRS ports comprises:
determining, by the terminal device, the first group of DMRS ports and the second group of DMRS ports when determining that a quantity of transmitted data streams meets a first condition.

7. The method according to claim 6, wherein configurations of the first group of DMRS ports and the second group of DMRS ports are related to the quantity of transmitted data streams, and the quantity of transmitted data streams comprises a quantity of transmitted data streams corresponding to the first antenna set and a quantity of transmitted data streams corresponding to the second antenna set.

8. The method according to any one of claims 1 to 7, wherein M is equal to 8.

9. A communication method, comprising:

determining, by a network device, a first group of demodulation reference signal DMRS ports and a second group of DMRS ports, wherein the first group of DMRS ports correspond to a first antenna set, the second group of DMRS ports correspond to a second antenna set, the terminal device corresponds to M antenna identifiers, the first antenna set corresponds to a part of the M antenna identifiers, and the second antenna set corresponds to the other part of the M antenna identifiers; and

sending, by the network device, received signals to the terminal device based on the first antenna set and the second antenna set, wherein the received signals comprise a first received signal corresponding to the first antenna set and a second received signal corresponding to the second antenna set.

10. The method according to claim 9, wherein the antenna identifier comprises a sounding reference signal SRS antenna port number and/or an antenna number.

11. The method according to claim 9 or 10, wherein the first group of DMRS ports belong to a first code division multiplexing CDM group, the second group of DMRS ports belong to a second CDM group, the first CDM group comprises at least one CDM group, and the second CDM group comprises at least one CDM group.

12. The method according to claim 11, wherein the first CDM group is different from the second CDM group.

13. The method according to claim 11 or 12, wherein the method further comprises:
sending, by the network device, first indication information to the terminal device, wherein the first indication information indicates that the first antenna set corresponds to the first CDM group and/or the second antenna set corresponds to the second CDM group.

14. The method according to any one of claims 9 to 13, wherein configurations of the first group of DMRS ports and the second group of DMRS ports are related to a quantity of transmitted data streams, and the quantity of transmitted data streams comprises a quantity of transmitted data streams corresponding to the first antenna set and a quantity of transmitted data streams corresponding to the second antenna set.

15. The method according to any one of claims 9 to 14, wherein M is equal to 8.

16. A communication apparatus, comprising a processing unit and a communication unit, wherein

the processing unit is configured to determine a first group of demodulation reference signal DMRS ports and a second group of DMRS ports, wherein the first group of DMRS ports correspond to a first antenna set, the second group of DMRS ports correspond to a second antenna set, the apparatus corresponds to M antenna identifiers, the first antenna set corresponds to a part of the M antenna identifiers, and the second antenna set corresponds to the other part of the M antenna identifiers; and
the communication unit is configured to receive received signals from a network device based on the first antenna set and the second antenna set, wherein the received signals comprise a first received signal corresponding to the first antenna set and a second received signal corresponding to the second antenna set.

17. The apparatus according to claim 16, wherein the antenna identifier comprises a sounding reference signal SRS antenna port number and/or an antenna number.

18. The apparatus according to claim 16 or 17, wherein the first group of DMRS ports belong to a first code division multiplexing CDM group, the second group of DMRS ports belong to a second CDM group, the first CDM group comprises at least one CDM group, and the second CDM group comprises at least one CDM group.

19. The apparatus according to claim 18, wherein the first CDM group is different from the second CDM group.

20. The apparatus according to claim 18 or 19, wherein
the communication unit is further configured to receive first indication information from the network device, wherein the first indication information indicates that the first antenna set corresponds to the first CDM group and/or the second antenna set corresponds to the second CDM group.

21. The apparatus according to any one of claims 16 to 20, wherein
the processing unit is configured to determine the first group of DMRS ports and the second group of DMRS ports when determining that a quantity of transmitted data streams meets a first condition.

22. The apparatus according to claim 21, wherein configurations of the first group of DMRS ports and the second group of DMRS ports are related to the quantity of transmitted data streams, and the quantity of transmitted data streams comprises a quantity of transmitted data streams corresponding to the first antenna set and a quantity of transmitted data streams corresponding to the second antenna set.

23. The apparatus according to any one of claims 17 to 22, wherein M is equal to 8.

24. A communication apparatus, comprising a processing unit and a communication unit, wherein

the processing unit is configured to determine a first group of demodulation reference signal DMRS ports and a second group of DMRS ports, wherein the first group of DMRS ports correspond to a first antenna set, the second group of DMRS ports correspond to a second antenna set, the terminal device corresponds to M antenna identifiers, the first antenna set corresponds to a part of the M antenna identifiers, and the second antenna set corresponds to the other part of the M antenna identifiers; and
the communication unit is configured to send received signals to the terminal device based on the first antenna set and the second antenna set, wherein the received signals comprise a first received signal corresponding to the first antenna set and a second received signal corresponding to the second antenna set.

25. The apparatus according to claim 24, wherein the antenna identifier comprises a sounding reference signal SRS antenna port number and/or an antenna number.

26. The apparatus according to claim 24 or 25, wherein the first group of DMRS ports belong to a first code division multiplexing CDM group, the second group of DMRS ports belong to a second CDM group, the first CDM group comprises at least one CDM group, and the second CDM group comprises at least one CDM group.

27. The apparatus according to claim 26, wherein the first CDM group is different from the second CDM group.

28. The apparatus according to claim 26 or 27, wherein
the communication unit is further configured to send first indication information to the terminal device, wherein the first indication information indicates that the first antenna set corresponds to the first CDM group and/or the second antenna set corresponds to the second CDM group.

29. The apparatus according to any one of claims 24 to 28, wherein configurations of the first group of DMRS ports and the second group of DMRS ports are related to a quantity of transmitted data streams, and the quantity of transmitted data streams comprises a quantity of transmitted data streams corresponding to the first antenna set and a quantity of transmitted data streams corresponding to the second antenna set.

30. The apparatus according to any one of claims 24 to 29, wherein M is equal to 8.

31. A communication apparatus, wherein the apparatus comprises at least one processor and a communication interface, and the at least one processor invokes a computer program or instructions stored in a memory to perform the method according to claims 1 to 8.

32. A communication apparatus, wherein the apparatus comprises at least one processor and a communication interface, and the at least one processor invokes a computer program or instructions stored in a memory to perform the method according to claims 9 to 15.

33. A communication system, wherein the system comprises the apparatus according to claim 31 and the apparatus according to claim 32.

34. A computer-readable storage medium, wherein the computer-readable storage medium stores instructions, and when the instructions are run on a processor, the method according to any one of claims 1 to 15 is implemented.

35. A computer program product, wherein the computer program product comprises computer program code, and when the computer program code is run on a computer, the method according to any one of claims 1 to 15 is implemented.

FIG. 1

First antenna set

Second antenna set

Network device

Terminal device

FIG. 2

Network device

SRS 1    CSI 1  CW 1  HARQ 1
SRS 2  CSI-RS  CSI 2  CW 2  HARQ 2

Terminal device

SRS 1: Sounding reference signal corresponding to a first antenna set

SRS 2: Sounding reference signal corresponding to a second antenna set

CSI-RS: Channel state information reference signal

CW 1: Codeword corresponding to the first antenna set

CW 1: Codeword corresponding to the second antenna set

CSI 1: Channel state information corresponding to the first antenna set

CSI 2: Channel state information corresponding to the second antenna set

HARQ 1: Hybrid automatic repeat request corresponding to the first antenna set

HARQ 2: Hybrid automatic repeat request corresponding to the first antenna set

FIG. 3

8R receiver device

Receive antenna

FIG. 4

Network device

SRS  CSI-RS  CSI  CW  HARQ

8R receiver device

SRS: Sounding reference signal

CSI-RS: Channel state information reference signal

CSI: Channel state information

CW: Codeword

HARQ: Hybrid automatic repeat request

FIG. 5

FIG. 6

```
┌─────────────────────┐                    ┌─────────────────────┐
│   Terminal device   │                    │   Network device    │
└──────────┬──────────┘                    └──────────┬──────────┘
           │                                          │
┌──────────┴──────────────────┐                       │
│ S701: Determine a first group of                    │
│ DMRS ports and a second group                       │
│      of DMRS ports          │                       │
└──────────┬──────────────────┘                       │
           │     S702: Send received signals based    │
           │     on a first antenna set and a second  │
           │              antenna set                 │
           │◄─────────────────────────────────────────│
┌──────────┴──────────────────┐                       │
│  S703: Receive the received │                       │
│ signals based on the first antenna                  │
│  set and the second antenna set                     │
└──────────┬──────────────────┘                       │
           │                                          │
```

FIG. 7

```
┌─────────────────┐                    ┌─────────────────┐
│    Terminal     │                    │     Network     │
│     device      │                    │     device      │
└────────┬────────┘                    └────────┬────────┘
         │                                      │
┌────────┴──────────────┐                       │
│ S801: Determine one CSI set or                │
│      at least one CSI set                     │
└────────┬──────────────┘                       │
         │    S802: Send the one CSI set or     │
         │       the at least one CSI set       │
         │─────────────────────────────────────►│
         │                             ┌─────────┴─────────────┐
         │                             │ S803: Receive the one CSI set │
         │                             │  or the at least one CSI set  │
         │                             └─────────┬─────────────┘
         │                                      │
```

FIG. 8

| Terminal device | | Network device |
|---|---|---|

S901: Determine that interference of a first received signal corresponding to a first antenna set to a second received signal corresponding to a second antenna set is less than a first threshold

S902: Send the first received signal and the second received signal based on the first antenna set and the second antenna set

S903: Receive the first received signal and the second received signal based on the first antenna set and the second antenna set

**FIG. 9**

| Communication apparatus 1000 |
|---|
| Processing unit 1001 |
| Communication unit 1002 |

**FIG. 10**

FIG. 11

## INTERNATIONAL SEARCH REPORT

| International application No. |
|---|
| **PCT/CN2023/142259** |

### A. CLASSIFICATION OF SUBJECT MATTER

H04B 7/0456(2017.01)i

According to International Patent Classification (IPC) or to both national classification and IPC

### B. FIELDS SEARCHED

Minimum documentation searched (classification system followed by classification symbols)

IPC: H04B H04W

Documentation searched other than minimum documentation to the extent that such documents are included in the fields searched

Electronic data base consulted during the international search (name of data base and, where practicable, search terms used)

CNTXT; CNKI; WPABSC; ENTXTC; ENTXT; 3GPP: 解调, 参考信号, 端口, 天线, 集合, 组, 标识, 虚拟, 码分多路复用, demodulation, reference, DMRS, port, antenna, set, group, ID, CDM

### C. DOCUMENTS CONSIDERED TO BE RELEVANT

| Category* | Citation of document, with indication, where appropriate, of the relevant passages | Relevant to claim No. |
|---|---|---|
| X | CN 109802801 A (HUAWEI TECHNOLOGIES CO., LTD.) 24 May 2019 (2019-05-24) description, paragraphs 124-197 and 353-365 | 1-2, 8-10, 15-17, 23-25, 30-35 |
| Y | CN 109802801 A (HUAWEI TECHNOLOGIES CO., LTD.) 24 May 2019 (2019-05-24) description, paragraphs 124-197 and 353-365 | 3-5, 11-13, 18-20, 26-28 |
| Y | CN 115136503 A (QUALCOMM INC.) 30 September 2022 (2022-09-30) description, paragraphs 50-63 | 3-5, 11-13, 18-20, 26-28 |
| A | CN 114257354 A (CHINA MOBILE COMMUNICATION CO., LTD., RESEARCH INSTITUTE et al.) 29 March 2022 (2022-03-29) entire document | 1-35 |
| A | US 2020052842 A1 (QUALCOMM INC.) 13 February 2020 (2020-02-13) entire document | 1-35 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 March 2024** | **25 March 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
|---|
| **PCT/CN2023/142259** |

| Patent document cited in search report | | | Publication date (day/month/year) | Patent family member(s) | | | Publication date (day/month/year) |
|---|---|---|---|---|---|---|---|
| CN | 109802801 | A | 24 May 2019 | JP | 2021503819 | A | 12 February 2021 |
| | | | | JP | 7080972 | B2 | 06 June 2022 |
| | | | | WO | 2019096248 | A1 | 23 May 2019 |
| | | | | US | 2020374074 | A1 | 26 November 2020 |
| | | | | US | 11258563 | B2 | 22 February 2022 |
| | | | | EP | 3672102 | A1 | 24 June 2020 |
| | | | | EP | 3672102 | A4 | 18 November 2020 |
| | | | | EP | 3672102 | B1 | 09 March 2022 |
| | | | | US | 2022140973 | A1 | 05 May 2022 |
| | | | | US | 11569959 | B2 | 31 January 2023 |
| | | | | EP | 4054088 | A1 | 07 September 2022 |
| | | | | EP | 4054088 | B1 | 21 February 2024 |
| | | | | US | 2020052853 | A1 | 13 February 2020 |
| | | | | US | 10771219 | B2 | 08 September 2020 |
| | | | | NZ | 763969 | A | 25 March 2022 |
| | | | | BR | 112020008403 | A2 | 03 November 2020 |
| CN | 115136503 | A | 30 September 2022 | WO | 2021163996 | A1 | 26 August 2021 |
| | | | | US | 2023025805 | A1 | 26 January 2023 |
| | | | | WO | 2021164693 | A1 | 26 August 2021 |
| | | | | EP | 4107866 | A1 | 28 December 2022 |
| | | | | CN | 115136503 | B | 05 December 2023 |
| CN | 114257354 | A | 29 March 2022 | CN | 114257354 | B | 17 October 2023 |
| | | | | WO | 2022063088 | A1 | 31 March 2022 |
| US | 2020052842 | A1 | 13 February 2020 | US | 11362779 | B2 | 14 June 2022 |
| | | | | TW | 202033032 | A | 01 September 2020 |
| | | | | TWI | 809150 | B | 21 July 2023 |
| | | | | WO | 2020033125 | A1 | 13 February 2020 |

Form PCT/ISA/210 (patent family annex) (July 2022)

**REFERENCES CITED IN THE DESCRIPTION**

**Patent documents cited in the description**

- CN 202211733799